(19) Europäisches Patentamt / European Patent Office / Office européen des brevets

(11) **EP 2 988 455 A1**

(12) **EUROPEAN PATENT APPLICATION**

(43) Date of publication:
**24.02.2016 Bulletin 2016/08**

(51) Int Cl.:
**H04L 12/26** *(2006.01)*      **G06Q 30/02** *(2012.01)*

(21) Application number: **15182060.2**

(22) Date of filing: **21.08.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **22.08.2014 US 201462040914 P**

(71) Applicant: **Verisign, Inc.**
**Reston, VA 20190 (US)**

(72) Inventors:
• **NAMATA, Galileo Mark**
**Reston, Virginia 20190 (US)**
• **SIMPSON, Andrew W.**
**Reston, Virginia 20190 (US)**
• **THOMAS, Matthew**
**Reston, Virginia 20190 (US)**

(74) Representative: **Benson, Christopher et al**
**HGF Limited**
**4th Floor, Merchant Exchange**
**17-19 Whitworth Street West**
**Manchester M1 5WG (GB)**

(54) **DOMAIN NAME SYSTEM TRAFFIC ANALYSIS**

(57)    Systems, apparatus, and methods for selecting a domain name from a plurality of domain names. A set of network traffic data for a plurality of domain names is accessed. A change in network traffic is determined based on the set of network traffic data. The change in network traffic of each of the plurality of domain names is compared with each other. At least one domain name of the plurality of domain names is selected .based on the comparing of the change in network traffic of each of the plurality of domain names with each other. An action relating to the domain name of the plurality of domain names that was selected is performed.

1400

```
ACCESS TRAFFIC DATA OF PLURALITY OF
DOMAIN NAMES
1402
        |
        v
DETERMINE CHANGE IN NETWORK TRAFFIC
OF EACH DOMAIN NAME
1404
        |
        v
COMPARE CHANGE IN NETWORK TRAFFIC OF
EACH OF THE PLURALITY OF DOMAIN NAMES
WITH EACH OTHER
1406
        |
        v
SELECT A DOMAIN NAME BASED ON
COMPARISON
1408
        |
        v
PERFORM AN ACTION RELATED TO SELECTED
DOMAIN NAME
1410
```

**FIG. 14**

EP 2 988 455 A1

**Description**

CROSS-REFERENCE TO RELATED APPLICATIONS

This application claims priority to U.S. Provisional Patent Application Serial Nos. 62/040,914 filed on August 22, 2014, entitled "DOMAIN NAME SYSTEM TRAFFIC ANALYSIS", which is hereby incorporated by reference in its entirety.

BACKGROUND

Understanding user activity on the Internet is becoming more important, and more difficult, as the Internet continues to expand. Commercial use of the internet is one area that has expanded dramatically in the last decade, and one that has a particular interest in understanding, monitoring and predicting user activity. However, there are limitations on the capabilities of conventional traffic monitoring services that typically monitor the traffic of users or web sites to calculate traffic scores.

A description of the ways in which the Internet is intrinsically organized can be helpful in understanding the challenges related to efficiently monitoring and rating the traffic tor particular web sites on the internet.

The process of establishing a web site on the internet typically begins with a registrant registering a specific domain name through a registrar. The registrant is typically an individual or organization that identifies a domain name, such as "example.com". The registrant contacts a registrar to process the name registration. The registrar sends the necessary domain name service (DNS) information to a registry. A registrar may maintain a database containing additional customer information beyond that which is sent to the registry.

The registry receives DNS information from registrars, inserts that information into a centralized database and propagates the information on the internet so that domain names can be found by users around the world.

In general, the DNS is the part of the Internet infrastructure that translates human-readable domain names into the Internet Protocol (IP) numbers needed to establish TCP/IP communication over the Internet. That is, DNS allows users to refer to web sites, and other resources, using easier to remember domain names, such as "www.example.com", rather than the numeric IP addresses, such as "123.4.56.78", assigned to computers on the Internet. Each domain name is made up of a series of character strings (labels) separated by dots. The rightmost label in a domain name is known as the "top-level domain" (TLD). Examples of well-known TLDs are ".com"; ".net"; ".org." etc. Each TLD supports second-level domains, listed immediately to the left of the TLD, e.g. the "example" level in "www.example.com". Each second-level domain can include a number of third-level domains located immediately to the left of the second-level domain, e.g. the "www" level in "www.cxample.com". There can be additional level domains as well, with virtually no limitation. For example, a domain with additional domain levels could be "www.photos.example.com".

Additional non-domain information may be included in a Uniform Resource Identifier ("URI") structure that includes the domain name. For example, a "path" part is a sequence of segments (conceptually similar to directories, though not necessarily representing them separated by a forward slash ("/"). This information may be included immediately to the right of the domain name, such as the "blog" in "www.example.com/blog", and may be used by a server or other receiving device to identify and deliver specific content or run particular code. Other examples of non-domain information may include queries and fragments, the specifics of which are understood by those of ordinary skill in the art and are not discussed in detail herein. Combinations of this information may be included in web page hyperlinks that navigate a user to another section of the same page or to another web page that may be part of the same, or a different, domain.

Related domain names, and content, may be organized in a hierarchical, or nested, manner, such as "www.example.com"; "www.blog.cxample.com"; "www.example.com/blog"; or "blog.examplc.com" etc., each with a different significance. Such related domains need not share similarities in the actual IP address to which the various domain names resolve to. In this regard, part of the domain name may signify a particular server which is desired, for example, "mail.example.com" and www.cxample.com" may resolve to different servers, with different functions, for the same second-level domain.

The above registration and structural aspects of the internet are then used by end-user applications to find specific resources on the internet by using the DNS resolution process. Aspects of the DNS resolution process are discussed below to aid in an understanding of the subject matter of the present application.

The responsibility for operating each TLD (including maintaining a registry of the second-level domains within the TLD) is delegated to a particular domain name registry. The registry is responsible for converting domain names to IP addresses ("resolving") through DNS servers that maintain such information in large databases, and operating its top-level domain. The DNS stores IP addresses and domain names, facilitating service to addresses in TLDs, such as .com, .net, .edu, and .tv. Resolving is the process by which domain names are matched with corresponding IP numbers. Resolving is accomplished by a combination of computers and software, referred to as name servers that use the data in the DNS to determine which IP numbers correspond to a particular domain name. The following general definitions will he used herein.

Resolve: To translate domain name to IP address.

Resolver: A computer issuing a query in order to resolve a domain name.

Name server: A computer receiving queries and answering them directly or via resolve against other name servers.

Subnet: A group of IP addresses sharing octets of the IP address.

Internet domains can be divided to groups according to their TLD suffix (e.g., .com, .net, .co.uk ... ) with different registries responsible for each of them. A single registry may be responsible for several of these groups, such as the VeriSign registry which is responsible for .com and .net domains.

The DNS is maintained by a distributed database system, which uses the client-server model. The nodes of this database are the name servers. Each domain or subdomain has one or more authoritative DNS servers that publish information about that domain and the name servers of any domains subordinate to it. The top of the hierarchy is served by the root name servers, the servers to query when looking up (resolving) a TLD.

The DNS distributes the responsibility of assigning domain names and mapping those names to IP addresses by designating authoritative name servers for each domain. Authoritative name servers are assigned to be responsible for their particular domain.

In theory a fully qualified domain name may have several name segments, (e.g. www.one.type.example.com). For querying purposes, the name segment is typically interpreted by segment, from right to left. At each step along the way, a corresponding DNS server is queried to provide a pointer to the next server which it should consult.

Because of the huge volume of requests generated by DNS, the resolution process also allows for caching *(i.e.* the local recording and subsequent consultation of the results of a DNS query) for a given period of time after a successful answer. How long a resolver caches a DNS response (*i.e.* how long a DNS response is considered valid) is determined by a value called the time to live (TTL). The TTL is generally set by the administrator of the DNS server handling the response. The period of validity may vary from just seconds to days or even weeks.

Based on the DNS structure, as well as the caching function, there are two classifications typically applied to the name servers, authoritative and recursive (caching). An authoritative name server is a name server that gives original, definitive answers ("authoritative" answers) to DNS queries. Every domain name must be assigned a set of authoritative name servers that are responsible for resolving the domain name.

As indicated above, the DNS also uses recursive cache servers, which store DNS query results for a period of time determined TTL of the domain name record in question. Typically, such caching DNS servers also implement the recursive algorithm necessary to resolve a given name starting with the DNS root through to the authoritative name servers of the queried domain. Internet service providers (ISPs) typically provide recursive and caching name servers for their customers. In addition, many home networking routers implement DNS caches and recursors to improve efficiency in the local network.

DNS "stub" resolvers are also known that essentially operate as a cache-less application to resolve DNS names into IP addresses. The DNS stub resolver forwards DNS queries to the DNS server configured for the workstation (or server) and returns the DNS server's response to the requesting software. If a stub resolver queries a caching nameserver for a record that is being held by the caching server before the TTL has expired, the caching server will reply with the cached resource record rather than retrieve it from the authoritative name server again.

SUMMARY

Consistent with some examples of the present disclosure, there is provided computer-implemented methods, apparatus, and non-transitory computer readable storage media storing a set of instructions to access a set of network traffic data for a plurality of domain names; determine a change in network traffic based on the set of network traffic data; compare the change in network traffic of each of the plurality of domain names with each other; select at least one domain name of the plurality of domain names based on the comparing of the change in network traffic of each of the plurality of domain names with each other; and perform an action relating to the domain name of the plurality of domain names that was selected.

Optionally, determining a change in network traffic may include accessing network traffic from the set of network traffic data for each of the plurality of domain names for a first time period; accessing network traffic form the set of network traffic data for each of the plurality of domain names for a second time period; and determining the change in network traffic for each of the plurality of domain names based on the network traffic for the first time period and the second time period.

Optionally, the set of network traffic data for each of the plurality of domain names includes at least one of a number of unique recursives, for example, a number of unique recursive name servers that have transmitted queries, and a number of queries.

Optionally, each of the plurality of domain names may be categorized into one of a plurality of categories based on information associated with the domain name, wherein comparing the change in network traffic of each of the plurality of domain names with each other includes comparing the change in network traffic of each of the plurality of domain names that are categorized in the same category.

Optionally, each of the plurality of domain names are categorized based on at least one of network traffic and content of a website at the domain name.

Optionally, performing an action may include determining a service to offer an owner of the at least one domain name of the plurality of domain names that was selected based on the comparing of the change in network traffic of each of the plurality of domain names with each other; and offering the service that was determined to be offered.

Optionally, the offer includes at least one of a networking service and a financial investment.

Optionally, the selecting at least one domain name of the plurality of domain names based on the comparing of the change in network traffic of each of the plurality of domain names with each other includes determining a standard deviation of the change of each of plurality of domain names with all of the other plurality of domain names.

Optionally, each of the plurality of domain names may be ranked based on a traffic score calculated based on the set of network traffic data and each of the plurality of domain names may be categorized into one of a plurality of categories based on the ranking.

Consistent with some examples of the present disclosure, there is provided computer-implemented methods, apparatus, and non-transitory computer readable storage media storing a set of instructions to access a set of network traffic data for a plurality of domain names; and, for each of the plurality of domain names: determine whether a hostname is an internal hostname; and classify the domain name and the name server when it is determined that the hostname is an internal hostname.

Before explaining at least one embodiment of the disclosure in detail, it is to be understood that the disclosure is not limited in its application to the details of construction and to the arrangements set forth in the following description or illustrated in the drawings. The disclosure is capable of embodiments in addition to those described and is capable of being practiced and carried out in various ways. Also, it is to be understood that the phraseology and terminology employed herein, as well as in the abstract, are for the purpose of description and should not be regarded as limiting.

The accompanying drawings, which are incorporated and constitute part of the specification, illustrate certain embodiments of the disclosure, and together with the description, serve to explain the principles of the disclosure.

As such, those skilled in the art will appreciate that the conception upon which this disclosure is based may readily be utilized as a basis for designing other structures, methods, and/or systems for carrying out the several purposes of the present disclosure. It is important, therefore, to recognize that the claims should be regarded as including such equivalent constructions insofar as they do not depart from the spirit and scope of the present disclosure.

BRIEF DESCRIPTION OF THE DRAWINGS

Figure 1 depicts an exemplary system and related network in accordance with some embodiments of the present disclosure;

Figure 2 depicts an exemplary system and related network in accordance with some embodiments of the present disclosure;

Figure 3 depicts aspects of an exemplary method in accordance with some embodiments of the present disclosure;

Figure 4 depicts aspects of an exemplary method in accordance with some embodiments of the present disclosure;

Figure 5 depicts aspects of an exemplary method in accordance with some embodiments of the present disclosure;

Figure 6 depicts aspects of an exemplary method in accordance with some embodiments of the present disclosure;

Figure 7 depicts aspects of an exemplary method in accordance with some embodiments of the present disclosure;

Figure 8 depicts aspects of an exemplary method in accordance with some embodiments of the present disclosure;

Figure 9 depicts an exemplary system and related network in accordance with some embodiments of the present disclosure;

Figure 10 depicts a chart reflecting a relation between domain traffic size and the percentage of the traffic going to the "Other" targets;

Figure 11 depicts a chart reflecting a relation between domain traffic size and the percentage of the traffic going to the "www" and "Exact" targets; and

Figure 12 depicts a chart reflecting numbers of domains grouped according to some embodiments of the present disclosure.

Figure 13 depicts a block diagram of a traffic analyzer in accordance with some embodiments of the present disclosure.

Figure 14 depicts an example flow diagram of a process for selecting a domain name in accordance with some embodiments of the present disclosure.

Figure 15 depicts an example flow diagram of a process for categorizing a plurality of domain names in accordance with some embodiments of the present disclosure.

Figure 16 depicts an example flow diagram of a process for determining an offer to be provided to a domain name in accordance with some embodiments of the present disclosure.

Figure 17 depicts an example flow diagram of a process for determining that a domain is used to serve an internal network and that a recursive name server is affiliated with a domain's internal network, in accordance with some embodiments of the present disclosure.

DETAILED DESCRIPTION

The following detailed description is provided with reference to exemplary embodiments for the case of description and understanding. The disclosure herein is not limited to the disclosed embodiments, but further encompasses other variations that fall within the overall scope of description provided herein.

There are currently several approaches used to provide web traffic information. For example, methods include panel-centric approaches in which selected samples of users are provided with a client agent that monitors their web traffic usage. There are also site-centric approaches in which web traffic statistics are gathered directly from the web server for a web site. Other methods focus on the ISP, and gather web usage traffic from logs of ISP's that are providing the web data to the client. However, these methods each suffer from drawbacks related to the point at which the data is gathered, the amount of data gathered and/or the materiality of the data that is gathered. For example, panel-centric applications are limited in their ability to obtain holistic views of activity on the Internet because they are limited to the selected users who are being monitored. Additionally, any attempt to catalogue the activities of the billions of individual Internet users, even if possible, would create massive amounts of data that would quickly reach an unmanageable level. ISP's are also limited in their ability to characterize the overall activity of the Internet based on their particular client base, geographical interests, and other factors that inherently or implicitly restrict the traffic that the particular ISP is privy to.

There are additional problems in determining accurate and meaningful traffic rankings for domains. In general, Internet traffic can be divided into two groups: user oriented traffic, and machine oriented traffic. User oriented traffic can be considered as activity generated by users browsing web sites. Machine oriented traffic can be considered as activity generated by automatic processes and services (e.g. antivirus updates, operation system updates, web services, etc.). For the purposes of commerce, identifying the user generated traffic driven into web sites may be considered important. Therefore, methods for measuring the user oriented traffic may be considered preferable. However, this is a significant challenge because, for example, information regarding the nature of the requestor cannot be obtained from the incoming DNS queries themselves. Another challenge in distinguishing between the traffic types is caused by the architecture of the Internet. DNS system, which refers queries initiated by intermediate DNS resolvers. This can obscure the nature of the end-user that initiated the request.

The present subject matter addresses many of the above issues through various mechanisms using DNS traffic data obtained at authoritative name servers, such as the TLD DNS servers. According to some embodiments discussed herein, a set of domains across the Internet can be ranked in ways that the above systems do not contemplate or achieve. In embodiments, several attributes and/or measurements may be obtained from the DNS traffic seen at authoritative name servers, such as the TLD DNS server for various domains, and used to calculate traffic scores. The calculated scores may be used to rank the domains. The calculated scores of each of the domains may then be compared with other in order to identify outliers within the set of domains. These outliers may then be considered overachievers, or underachievers, with respect to the other domains in the set of domains.

As discussed herein, DNS network traffic data is converted into a meaningful and useful form is the size of the DNS data. Registries may operate several resolution sites located at different parts of the world. The sites for one registry may answer over thirty four billion queries a day. This huge number of queries presents an overwhelming challenge in attempts to analyze raw data. The present application provides systems, apparatus, methods, and non-transitory computer-readable media storing instructions, executable by a processor to perform methods, for data aggregation that may reduce the overall amount of data into a more manageable size, and to analyze the data in order to identify one or more domains that have traffic that deviate from other domains. According to these methods, it has also been found that a more accurate picture of meaningful activity on the Internet can be developed, beyond what has been achieved by conventional methods using raw traffic data.

Disclosed methods may include different aggregation formats including, for example, domain summarized traffic information, which may list several statistics per domain per day, and domain detailed traffic information, which may list more detailed information about DNS queries. It has been found that a particularly useful example of DNS query information are the identities of a set of resolvers generating the queries.

Embodiments discloses herein provide for determining a change in network traffic including accessing network traffic from the set of network traffic data for each of the plurality of domain names for a first time period; accessing network traffic form the set of network traffic data for each of the plurality of domain names for a second time period;

and determining the change in network traffic for each of the plurality of domain names based on the network traffic for the first time period and the second time period.

Embodiments described herein provide for the set of network traffic data for each of the plurality of domain names includes at least one of a number of unique recursive name servers that have transmitted queries and a number of queries.

Embodiments described herein provide for categorizing each of the plurality of domain names into one of a plurality of categories based on information associated with the domain name, wherein comparing the change in network traffic of each of the plurality of domain names with each other includes comparing the change in network traffic of each of the plurality of domain names that are categorized in the same category.

Embodiments described herein provide for each of the plurality of domain names is categorized based on at least one of network traffic and content of a website at the domain name.

Embodiments described herein provide for performing an action including determining a service to offer an owner of the at least one domain name of the plurality of domain names that was selected based on the comparing of the change in network traffic of each of the plurality of domain names with each other; and offering the service that was determined to be offered.

Embodiments described herein provide for the offer including at least one of a networking service and a financial investment.

Embodiments described herein provide for selecting at least one domain name of the plurality of domain names based on the comparing of the change in network traffic of each of the plurality of domain names with each other includes determining a standard deviation of the change of each of plurality of domain names with all of the other plurality of domain names.

Embodiments described herein provide for ranking each of the plurality of domain names based on a traffic score calculated based on the set of network traffic data; and categorizing each of the plurality of domain names into one of a plurality of categories based on the ranking.

Embodiments disclosed herein may include automated methods for scoring a domain in which a request to resolve a domain name is received at an authoritative name server, such as a TLD DNS. Based on the received request, a server counter may be incremented for the domain name, and a domain traffic score may be calculated based upon the server counter. In embodiments, calculating the domain traffic score may include applying a weighting factor to the server counter based on information about a requesting a set of resolvers. The traffic score may be used to rank a plurality of domains. The traffic data of each of the plurality of ranked domains may be compared with each other in order to identify one or more domains having network traffic that deviates from other ranked domains.

Embodiments may also include categorizing the ranked domains into one or more categories. The traffic data of each of the plurality of ranked domains within each category may be compared with each other in order to identify one or more domains in each category having network traffic that deviates from other ranked domains within the same category.

Embodiments may also include, the server counter being limited to a predetermined number of counts for a particular requesting a set of resolvers in a predetermined period of time. For example, a counter for a set of resolvers may be limited one count per 24-hour period. Embodiments may include resetting the counter after the predetermined period of time.

Embodiments may include incrementing a hit counter each time the authoritative name server receives a request to resolve the domain name. In addition, calculating the domain traffic score may be based upon the hit counter.

Embodiments may include the weighting factor being based on various criteria such as, for example, a geographical location of the requesting set of resolvers, a network traffic level of the requesting set of resolvers, a network traffic type, and/or an architecture of the requesting set of resolvers.

Embodiments may include judging whether the request to resolve the domain name is initiated by a user or traffic that is likely machine generated; and determining the weighting factor based on the judgment.

Embodiments may include automatically calculating domain traffic scores for a plurality of domains serviced by the authoritative name server. Additionally, the plurality of domains may be automatically ranked based on the domain traffic scores. Embodiments may include calculating a ranking score based on a relative traffic score tor a domain among a predetermined category of domains. This may include comparing the domain traffic score of a domain with other domain traffic scores from the predetermined category of domains. Calculated traffic and/or ranking scores may be automatically distributed as part of a fee service, or used in determining other items such as an advertising rates, etc.

Embodiments may include determining various secondary values based on the rank of a domain such as, for example, an advertising rate, hosting value, and/or a popularity rating of the domain. As used herein, an advertising rate is understood as a rate at which advertising on a domain is valued for sale. The advertising rate can be used, for example, in the context of offering or completing an advertising transaction and/or providing a valuation to the owner of a domain. As used herein, a hosting value is a calculated value that represents the value of domain based on the described scoring methods. A hosting value can be used, for example, in transactions such as the sale of a domain, and/or providing the owner of a domain with a valuation of the domain. A popularity rating is a calculated value representing the popularity of the domain, and may be targeted to represent popularity of various types such as, for example, geographic popularity, user type popularity, traffic type popularity and the like. Through various combinations of the above factors, accurate rate tables used for various purposes may be developed for an extensive network of domains. This can be advantageous in providing a reliable and centralized advertising fee service, domain resale market, and the like, based on, or sponsored by, a TLD provider with information that is not otherwise available to other entities.

Embodiments may include counting requests that meet predetermined criteria with different counters. For example, request that meet a predetermined format may be counted by a particular counter, such as requests that include a "www" string being counted on a separate counter from requests that do not include a "www" string. In embodiments, different counters for a domain may be weighted differently such as, for example, counts of the requests including the "www" string being weighted differently in scoring calculations than a count of the requests not including the "www" string.

Provided herein are systems, apparatus, methods, and computer-readable mediums operable to perform functions including, counting and scoring DNS traffic using a contextual component approach that allows an analysis of statistics about overall volumes of traffic, as well as, to provide distilled and contextualized change information. The techniques described herein allow the use of DNS traffic to make the statement that over one or more periods of time, a particular domain name has seen a particular value representing a change in network traffic within the context of hours, days, or months. The particular level of granularity of the analysis tend to be a component of the particular algorithms used, especially if certain time windows require changes to the way the calculations end up getting made. A second level domain name may be considered because that may be where the data is statistically relevant when observing traffic for an TLD authoritative name server but it is conceivable that if you vantage points may be switched to a different level of authoritative name server or a recursive name server that the level of granularity here could change. The degree of change of network traffic may be determined and a metric representing the number of standard deviations that the change the particular domain name experienced is from normal change for a set of related domain names. The raw standard deviation number can be provide to make it easier to determine when there is really change versus no change (i.e. 2 standard deviations significant or not). Multiple selection vectors may be lumped into two categories: 1. Traffic Based: a. Volume - domains with Y are contextualized with others because at some point in time they were similar to one another and can be assumed to change similarly. b. Recursive name server characteristics - if we only observe traffic from RNS supporting crawlers, open resolvers, ISPs, from a particular region, 2. Content Based: a. Websites that have the same content on them b. Websites that are all used for eCommerce c. Websites that are in a similar language or hosted on a specific architecture. Ultimately all of those contextual filters can be used and exposed in a commercial offering to let end users determine what "change" would be relevant to them. For example a bank in India may want to look at eCommerce websites in Pakistan that are gaining momentum in India. The number and type of filters can be customized depending on application.

Servers that answer queries on the web often want to better understand who is querying IP addresses and why but the only data point they typically have access to is the IP address of the machine that is querying them. This issue is further compounded when you consider the complex network routing protocols that can often mean the IP address that you are queried by may not even be the one the client is sitting behind. Provided herein are ways of identifying the owner/operator/user behind IP addresses that are being used to provide recursive resolution DNS services for end users. Verisign resolves DNS queries for many reasons but chief among them is to resolve .COM and .NET names as the authoritative top level name server. In this role, Verisign receives requests from more than 3 million recursive resolvers each and every day and over a month has been known to see in excess of 20 million unique IP addresses querying the overall architecture. Provided herein is a technique to inspect the query patterns being emitted by each of these individual IP addresses to make some general inferences about who is using the recursive resolver. The types of inferences that may be made include a type of resolver, such as an end user ISP, a web crawler, a open recursive resolver, or corporate enterprise, and an owner/users of the resolver in the form of, for example, a company name, ISP name, or domain name that is believe to be tied with the primary operator or set of users that funnel queries through the resolver, and user volume, such as how many companies and how many end users.

If a recursive resolver can be classified with information about who is using it then it is possible to make statements and come to conclusions about what the end users using that resolver are interested in. For example, by classifying the resolvers in use by Google crawlers it will be possible to identify the domains that they are indexing and in some ways at what frequency they are bothering to index them. Furthermore if it is possible to identify that Recursive resolver X is in use by company Y then it is possible to understand what domain names company Y is interested in. This can be commercialized in many ways including but not limited to enabling domain owners to better understand who is querying them at the DNS level.

Provided herein is a technique for inspecting DNS traffic for specific unique patterns that can disclose who is using a specific IP address that is being used as Recursive Resolver. Broad query patterns from a single IP address can be analyzed to characterize its overall behavior and assign some classifications like ISP/Web Crawler/Corporate based on these data points: 1. Total queries issued 2. Total domains requested 3. Type of domains requested. The techniques disclosed herein allow the inspection of the actual queries from the recursive resolvers. The simplest example of what is planned here is to look for requests for hostnames like "intranet.vrsn.com". It is fairly logical to assume that the only recursive resolvers that would request the intranet for vrsn.com would be recursive resolvers in use by employees of vrsn.com. It is possible that employees ofvrsn.com are sitting at home or within the company's physical network. This is why it will be important to study all of the possible "internal" type requests made by any one recursive resolver so it becomes possible over time to understand how that resolver is used. This means we are going to learn over time what type of queries are particularly "internal" in nature that should only be emitted by machines running on a specific network. Due to search list, queries that reveal the internal domain are more common than many realized. Something as simple as google.com.vrsn.com coming out of a recursive resolver is a distinctive pattern that indicates "vrsn.com" is using that recursive resolver. Additional "internal patterns" will have various network based DNS activity in them. DNS is a protocol that is frequently used for network discovery (isatap, wpad, ldap, ad, bonjour to list a few) each append "search" criteria to a local domain that allows clients to better understand the network they are sitting in to determine how to interact with the machines in their network. Leveraging the fact that all of these details can be seen in DNS we can feed it all into our inferences about the domains in use by the machines in a resolver network.

Embodiments may include distinguishing between types of addresses requested in DNS queries. For example, embodiments may separately recognize exact requests, "www" requests, and other requests. As used herein, an exact request is a request that matches predetermined criteria, such as a specific number of labels. Exact requests may be identified in embodiments as containing two labels, such as an exact 2nd level domain name requested without any prefix. For example, an exact request for the domain "example.com" may be "'http://example.com/".

A "www" request is a request in which the character string "www" is included in a prefix. For example, a request that reads "http://www.example.com/", "http://wwwl.example.com/", and "http://AAA-www.example.com/", are recognized as "www" requests. As used herein, an "other" request is a request that does not meet either of the "exact" or "www" criteria, This may include other prefixes as part of the request. For example, "http:/(jobs.example.com/", "http://mail.example.com/", and "http:// AAA.BBB.example.com/", would be recognized as "other" requests, if no corresponding exact match was identified.

In embodiments, the following exemplary attributes about DNS queries for a domain may be obtained and used to calculate ranking:

WWW request hits. A count of hits on DNS records with "www" in the first label.
Exact request hits. A count of hits on DNS records with only two labels, e.g, only "example.com".

Other request hits. A count of hits on DNS records which fall into neither category above.

As discussed further below, embodiments may also includes applying appropriate weighting factors to the various request hits for a domain in determining traffic and/or ranking scores.

Embodiments may include accounting for the following attributes related to the originating IP address and/or a set of resolvers of DNS queries, and using them to calculate the ranking:

WWW server count. A count of unique downstream IP addresses or a set of resolvers hitting a DNS record with "www" in the first label.

Exact server count. A count of unique downstream IP addresses or a set of resolvers hitting a DNS record with only two labels.

Other server count. A count of unique downstream IP addresses or a set of resolvers hitting DNS records which fall into neither category above.

As discussed further below, embodiments may also include applying appropriate weighting factors to the various server counts for a domain in determining traffic and/or ranking scores.

Embodiments may include calculating the traffic and/or ranking scores based on a TTL of DNS records for the domain.

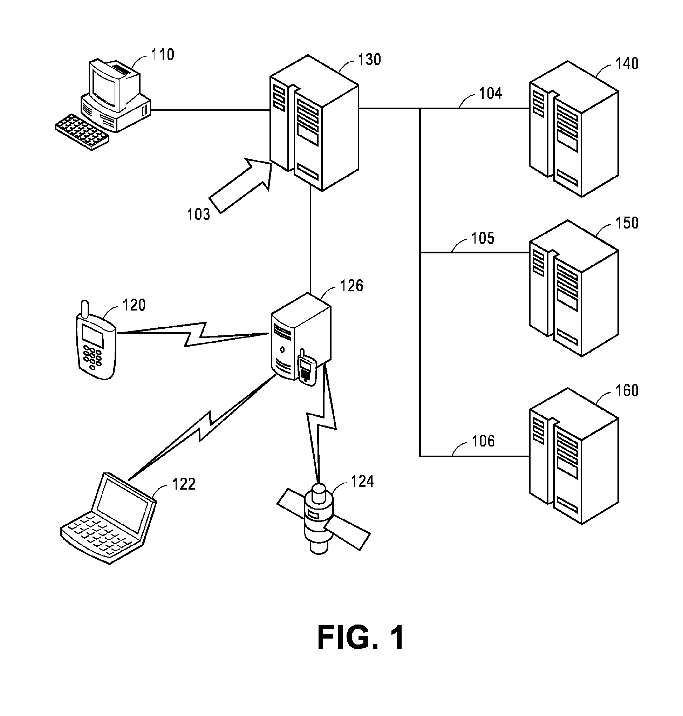

As indicated above, embodiments described herein may involve operations on a network, such as the Internet environment depicted in Fig. 1. A client computing device 110 may initiate a DNS request 103 to recursive name server 130. As suggested by Fig. 1, DNS requests 103 can be originated, or transmitted to recursive name server 130, from various sources such as mobile device 120, wireless computing device 122, other communication link 124, and/or intermediate network servers 126. The DNS request to resolve a domain name typically has n labels separated by periods. These labels are usually in some form that is easier to remember than the numerical IP address for a desires Internet resource, e.g. a web page. For the ease of description, the leftmost label may be considered to be the first label and the TLD is the nth label. Thus, in a request for "www.example.com", n = 3, the first label would be "www" and the TLD would be ".com". As described above, the recursive name server 103 may transmit the DNS request to various authoritative servers 140, 150, 160 as part of the recursive name resolution. Alternatively, the requested DNS information may reside in a cache of recursive name server 130, subject to the DNS record's TTL, in which case, the query may be answered without referring to the authoritative name servers 140, 150, 160.

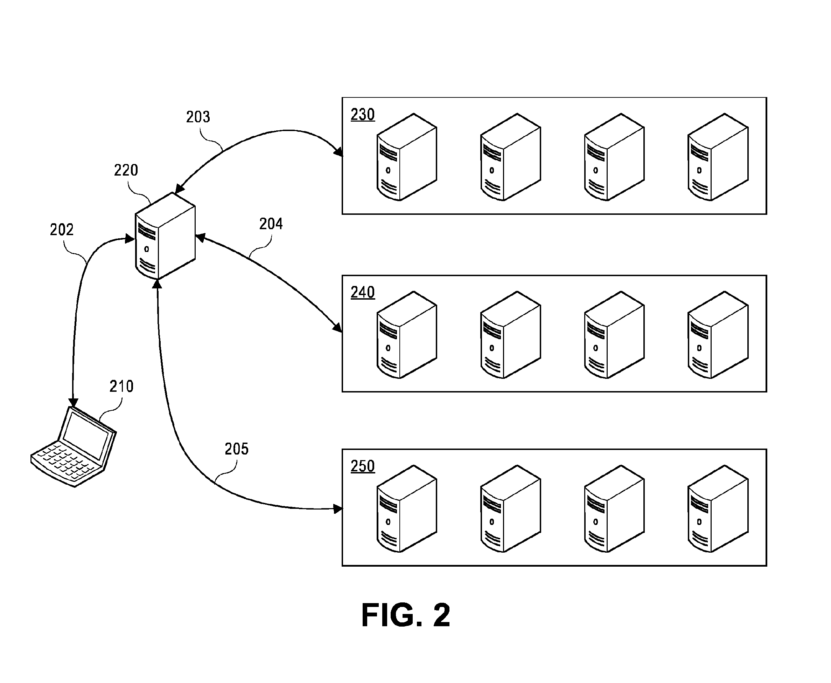

Fig. 2 depicts additional details regarding a recursive name server 220 and its interaction with authoritative name servers 230, 240, 250. In Fig. 2, authoritative servers 230 are root level authoritative servers. Each of these servers contains information for particular TLDs on the internet. The root level servers can direct requests for domains within their TLD to other authoritative servers managed by that TLD registry. For example, DNS request 202 from client 210 may include a request for "www.example.com". Recursive name server 220 may first check an internal cache for a corresponding DNS record. If one is not found, the DNS request may be forwarded at 203 to root level authoritative name servers 230. An authoritative root level server among servers 230 that is responsible for ".com" may return DNS information for "example.com" directing the requestor to authoritative name servers 240, in this case these servers represent the constellation of servers for a registry of'.com".

As described herein, DNS requests, e.g., 203, 204, 205, can be counted at various authoritative servers, e.g., 230, 240, 250. In embodiments, the counting may be done at a TLD name server such as, for example, 230. Other authoritative name servers 240, 250 can also count DNS hits for those records handled by the respective server. Embodiments may include combining the scores from various servers, and/or TLDs, e.g. ".com.", ".net", ".edu", ·'.uk", to arrive at combined rankings.

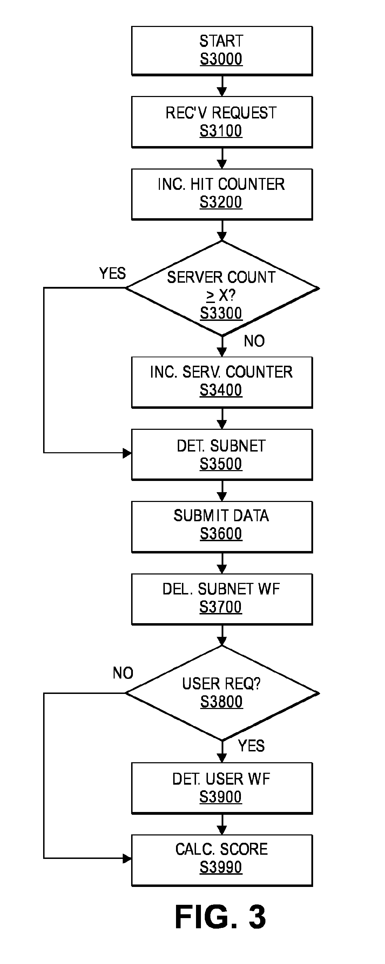

In embodiments, determinations may be made to count a request or not count a request on a given counter. For example, certain counters, such as a "server counter", may be limited to a single count per a predetermined period of time. As depicted in Fig. 3, a request may be received in S3100. A relevant hit counter may be incremented in S3200. In S3300 a determination may be made whether to increment a server counter. In this example, a current count of the server counter may be compared to a predetermined value "X". If the server count is greater than, or equal to, X, the determination is made not to increment the server counter again, and the method may proceed to S3500. If the server count is less than X, the method may proceed with S3400 where the server counter is incremented. The server count may be automatically reset after the predetermined period of time. Although described in the context of a server counter, other counters may be limited in similar manner, such as, counters associated with a particular IP address, a set of resolvers, etc. As described further below, limiting the count of certain counters may be used to develop a more accurate picture of meaningful Internet activities. These limited counters may be considered alone or in combination with hit counters to provide users with a manageable and accurate representation of overall web traffic. For example, using a limited counter may reduce the unwanted effects of artificial or unreliable traffic indicators, that may originate from a particular server, a set of resolvers, IP address, etc.

In S3500, a set of resolvers associated with the request may be determined. For ease of depiction in the figures, an exemplary set of resolvers may be referred to as a subnet. However, as discussed herein, features related to sets of resolvers are not limited to subnets *per se,* and may include other sets of resolvers that may represent various associations, such as, for example, address, geographic, organizational, and type, and combinations thereof. In embodiments, the determination may be made prior to determining whether to increment the server counter in S3300, such as to identify the appropriate counter to be evaluated. Data relevant to the set of resolvers may be determined and/or accessed in S3500. For example, as discussed further below, data relevant to the location, traffic level, traffic type etc. for the set of resolvers may be determined, calculated and/or accessed. In embodiments, information about a particularly identified requesting server may be used to apply an appropriate weighting factor, such as, for example, if the identified server is known to be utilized by web crawlers, or the like, that generate significant non-user traffic. A list of such servers may be stored in a database with or without appropriate weighting factors. Thus, requesting servers that appear to be, or are documented to be, data-oriented in nature can be penalized in the domain scoring. The method continues with S3700.

In S3700, a weighting factor (WF) for the set of resolvers is determined. This determination may be based on various data, as determined in S3600, and may he applied in calculating the score for the domain in S3900.

In S3800, the request may be evaluated to determine whether it represents user generated traffic. This determination may be based on various factors, such as, tor example, information embedded the request, information regarding the originating set of resolvers, the subnet architecture and the like. Exemplary methods of making this determination are described further below. If S3800 indicates that the request is likely related to user generated traffic, a user weighting factor may be determined in S3900. In embodiments, user generated traffic may be given a higher WF than other traffic, such as traffic that is of undetermined origin, or traffic that is likely machine generated. In embodiments, only user generated traffic may be considered by applying a WF = 1, and all other traffic disregarded by applying a WF = 0.

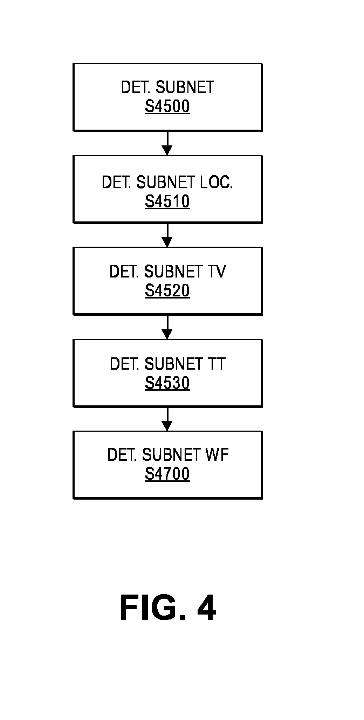

With reference to Fig. 4, exemplary methods may include determining a set of resolvers in S1500 associated with a received request, e.g. in similar manner to S3500 in Fig. 3. This type of information is typically available to the authoritative server with the received request in order to provide return address information for the domain address information being requested from the authoritative server. The method may continue with S4510.

In S4510, the request may be evaluated to determine a set of resolvers location. The origin location, such as the country of the resolving server, has significance in representing the number of users behind its queries. This is due to various factors, including the fact that, in some countries in which the Internet is strongly developed, there are many more resolvers per Internet user than in other, less-developed, countries. These numbers are not necessarily static and can be refined on an ongoing basis to provide even more valuable information.

As shown in Table 1, data regarding the number of users per set of resolvers in different geographic regions can be used to advantageously estimate a traffic score represented by individual requests from various sets of resolvers, such as subnets.

Table 1:

| Country | Users | Total Subnets | Small Subnets | Small Subnet Ratio | Users per Subnet |
|---------|-------|---------------|---------------|-------------------|------------------|
| Country A | 34,820,000 | 22,482 | 4,320 | 19% | 1,917 |
| Country B | 34,708,144 | 35,203 | 9,129 | 26% | 1,331 |
| Country C | 32,700,000 | 30,931 | 5,444 | 18% | 1,283 |
| Country D | 28,000,000 | 30,070 | 8,312 | 28% | 1,287 |
| Country E | 26,500,000 | 17,958 | 1,197 | 7% | 1,581 |

In embodiments, a number of users per set of resolvers may be used as a basis for the weight factor (WF) determined for the set of resolvers in S4700, e.g. according to the country of origin. In circumstances where these values are not well know, or subject to change, the affect of the metric may be reduced by using a non-linear function. For example, a root in the 3rd order achieves good results in balancing between the range and granularity. This scale has been found to produce a max/min ratio of about 10. Information about a given country, the set of resolvers and users within the country, and/or overall countries of interest may be advantageously combined. For example, in embodiments, combinations of the geographic information above may be used in calculating the domain traffic such as by the following formula:

$$Weight_c = \sqrt[3]{\frac{InternetUsers_c}{Subnets_c - SmallSubnets_c}}$$

$$Score(d) =$$

$$\frac{1}{n}\left(\frac{\sum_{c \in C} W_c(d) \cdot Weight_c}{\sum_{c \in C} UniqueW_c \cdot Weight_c} + \frac{m_c \cdot \sum_{c \in C} E_c(d) \cdot Weight_c}{\sum_{c \in C} UniqueE_c \cdot Weight_c} + \frac{m_o \cdot \sum_{c \in C} O_c(d) \cdot Weight_c}{\sum_{c \in C} UniqueO_c \cdot Weight_c}\right)$$

where

d - domain
C - countries of interest
$W/E/O_c$ - W/E/O subnets from country c referring to domain d
$Weight_c$ - the weight of country c
$UniqueW/E/O_c$ - unique W/E/O subnets from country c
$n/m_c/m_o$ - heuristic based variables

By using such formulas in calculating a domain score, a more accurate estimation of traffic volume may be achieved, particularly with domains that are more heavily frequented by non-U.S. users. That is, by separately weighting a set of resolvers according to geographic region, a more accurate representation of the global popularity of a domain may be achieved. Additionally, in terms of advertising and value of a domain to a given customer, it may be advantageous to refine the popularity calculation to weight certain geographically based traffic more or less. For example, advertisers for a certain product or service may be interested in the relative popularity of a domain within a geographic region, or common culture, language, and the like. In those instances, embodiments of the present subject matter provide mechanisms for calculating scores that reflect the traffic that is significant to the customer, such as by adjusting the weighting factors for certain countries/regions of interest above those countries/regions that arc less significant to the customer.

Such methods may include receiving a criteria from a customer, such as, for example, a geographic region, calculating the scores and/or ranks for a domain based on the user-defined criteria, and reporting the results of the modified scoring to the customer. The above factors provide improved flexibility in scoring domains depending on the intended audience, e.g. a global or localized audience. Thus, aspects of the present subject matter may capitalize on the set of resolvers information received by authoritative name servers in conjunction with customer-specific information to improve and refine the scoring for domain traffic.

As shown in Fig. 4, as part of determining a subnet WF, embodiments may include determining a set of resolvers traffic volume (TV) in S4520. It has been found that the traffic volumes for various sets of resolvers may vary greatly across the internet, and that the traffic volume, such as the number of queries issued by the set of resolvers in a given time, can be used to estimate a WF for the set of resolvers. For example, it has been found that about 40% of the resolver IP addresses generate 10 DNS queries a day or less. This low-level TV may be used to infer a corresponding low number of users, compared to resolvers that generate a higher volume of queries per day. That is, a set of resolvers with a low number of overall queries per day may represent a low number of users with lower level overall traffic at the resolver level, that may be assumed for purposes of weighting the relative significance of the requests received at the authoritative server.

Additionally, there are changing numbers and percentages of DNS resolvers that refer to a very small number of domains per day (i.e. small set of resolvers). In certain embodiments, counters for set of resolvers that issue queries for a very small number of domains may be weighted differently than a set of resolvers that issue queries for a large number of domains per day, e.g. a set of resolvers that refer to millions of domains per day. This type of sets of resolvers characteristic may be determined, for example, in S4530 as a traffic type (TT) determination. Traffic type may include other aspects of the traffic generated by a set of resolvers that may be useful in inferring the presence of user generated traffic versus machine generated traffic, which, as discussed herein, can be advantageously used in calculating the score and rank of a domain for the purposes of advertising, and the like, that are concerned with user generated traffic. Aspects of the present subject matter may capitalize on the information received by authoritative name servers in conjunction with metrics regarding requesting set of resolvers to improve and refine the scoring for domain traffic.

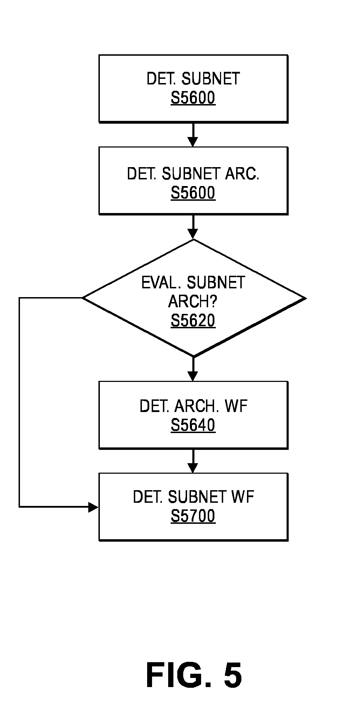

As shown in Fig. 5, embodiments of the present subject matter may also adjust a weighting factor for a set of resolvers based on characteristics of the set of resolvers architecture. This may be advantageous in circumstances such as, for example, where DNS clients are configured with primary and secondary DNS servers. In such circumstances, different IP addresses for a plurality of servers, such as primary and secondary servers, may represent a common user base. However, each IP address and server may represent unequal levels of user activity with respect to other servers based on the relative percentage of traffic handled by the particular server. It has been found that the respective percentages for a plurality of servers of a DNS client may be found by monitoring traffic information at the authoritative name server level, and that an appropriate weighting factor may be applied based on this determination. For example, as shown in Fig. 5, a set of resolvers may be determined in S5500, e.g. in similar manner to S3500 in Fig. 3. In S5600, aspects of a set of resolvers architecture may be determined, such as determining whether there are other unique IP addresses for redundant servers for the set of resolvers. In S5620, the set of resolvers architecture may be evaluated to determine whether it meets a predetermined criteria such as, for example, is there redundancy among IP addresses for the set of resolvers. In the case of an affirmative result in S5620, the method may continue with S5640, where an architectural weighting factor may be assigned. In embodiments the architectural WF may be based on a percentage of traffic handled by the particular IP address of the set of resolvers.

For example, in the context of a set of resolvers with n resolvers, with a traffic percentage determined for each server, a formula may be applied in which the score for a set of resolvers may be based on discreet calculations for individual resolvers, such as individual IP addresses, within the set of resolvers that apply weighting factors based on the respective percentages to scores of individual resolvers, e.g.:

$$S_{R1}w_1 + S_{R2}w_2 + S_{Rn}w_n$$

Where:

$S_{R1}$ is a score from a first resolver,
$S_{R2}$ is a score from a second resolver, and
$w$ is a unique weighting factor for each resolver.

Once the architectural WF is determined, or in the case of a negative result in S5620, the method may continue with determining an overall WF for the set of resolvers in S5700. Thus, in circumstances with separate IP addresses for a given set of resolvers, the different IP addresses may be counted with different counters, and separate weighting factors applied to the different counters.

With further reference to Fig. 5, an additional example of applying a set of resolvers architecture WF may include separately counting additional network entities for a given set of resolvers. In the context of set of resolvers architecture, the following entities may be separately evaluated:

Autonomous system number (ASN) - Globally unique number assigned to a single network or a group of networks that is managed by a single administrative entity, such as a

University or business.

Second level domain (SLD) - The second part of the domain (e.g. "verisign" in vcrisign.com). This is usually associated with the ISP.

Organization (ORG) - The organization that makes use of the IP.

By examining the relationship between these entities and their corresponding set of resolvers, in circumstances, ASN may be most aggregative, followed by the SLD and ORG, which may be similar in their aggregative level. That is, an ASN entity may have a higher number of set of resolvers represented, followed by SLD and ORG entities. In embodiments, different counters may be incremented according to the distinct ASN(s), SLD(s), and/or ORG(s) as derived from the set of resolvers. As depicted in Fig. 5, this may include determining the relevant ASN, SLD, and/or ORG in S5600-S5620, and applying an appropriate architectural WF in S5640 to a given counter for the respective set of resolvers's ASN, SLD, and/or ORG counter. By using different weighting factors for the individual entities within a set of resolvers, improved predictive models may be established in calculating a domain score based on DNS traffic information. For example, traffic from a ASN may be more heavily weighted with respect to SLD and/or ORG counters in calculating the domain score. For example, an average, or other normalizing calculation, may be taken of:

$$S_{ASN}w_1 + S_{SLD}w_2 + S_{ORG}w_3 + S_{SUB}w_4$$

Where:

$S_{ASN}$ is a score based on ASN
$S_{LD}$ is a score based on SLD
$S_{ORG}$ is a score based on ORG
$S_{SUB}$ is a score based on the subnet, and
w is a unique weighting factor tor each score.

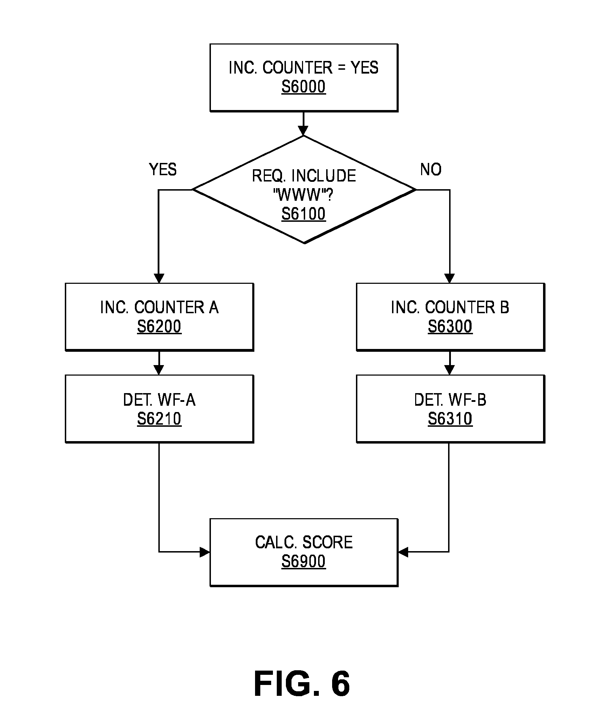

With reference to Fig. 6, exemplary methods may include determining if a counter is to be incremented with respect to a received request in S6000, e.g. in a similar manner to S3300 in Fig. 3. As detailed above, in some embodiments, a hit counter may be incremented for received DNS requests for a domain. In some instances, it may be determined that a limited counter will not be incremented. In the event that the counter in question will be incremented, the method may proceed with S6100.

In S6100, the request may be evaluated to determine whether the first label of a received domain name includes the string "www". The string may be an independent part of the requested address, as in the case of"www.example.com", or nested with other characters, such as "wwwl.example.com". If it is determined that the first label includes the string "www", then the method may proceed with S6200, where a counter "A" may be incremented, such as a www counter for the domain name. If the first label of the received domain name does not include the string "www", the method may proceed to S6300.

In S6300. a counter "B" may be incremented, such as a miscellaneous counter for the domain name. Although it is not required to count miscellaneous requests, i.e. requests that do not meet any of the preceding categories, a miscellaneous counter may provide advantages in evaluating the meaningfulness of detected traffic. For example, a miscellaneous counter may be used in comparison with the www counter to determine a percentage of traffic that is apparently driven by human interaction.

In S6210, and/or S6310, a weighting factor may be determined and/or assigned to the counters A and/or B, respectively. Weighting factors may be applied to all, or less than all, of the counters for a domain. Assigning a weighting factor can be based on several factors related to the nature of the counter and other information gathered with respect to the domain. Weighting factors may also be applied in a dynamic manner. For example, over the course of time, the counts of the different counters for a domain may change or information may be developed regarding the domain. This may prompt a change in one or more of the weighting factors applied to the counters for the domain. The method may continue with S6900.

In S6900, a score may be calculated for the domain, such as a traffic score. The traffic score may be based on a plurality of the counters. It should be noted that it is not required to use counts from all of the relevant counters. Scores may be calculated based on one, two or more counts, with any relevant weighting factors considered. Thus, a domain traffic score may be calculated based upon a plurality of the counters, and may include applying a weighting factor to at least one of the counters.

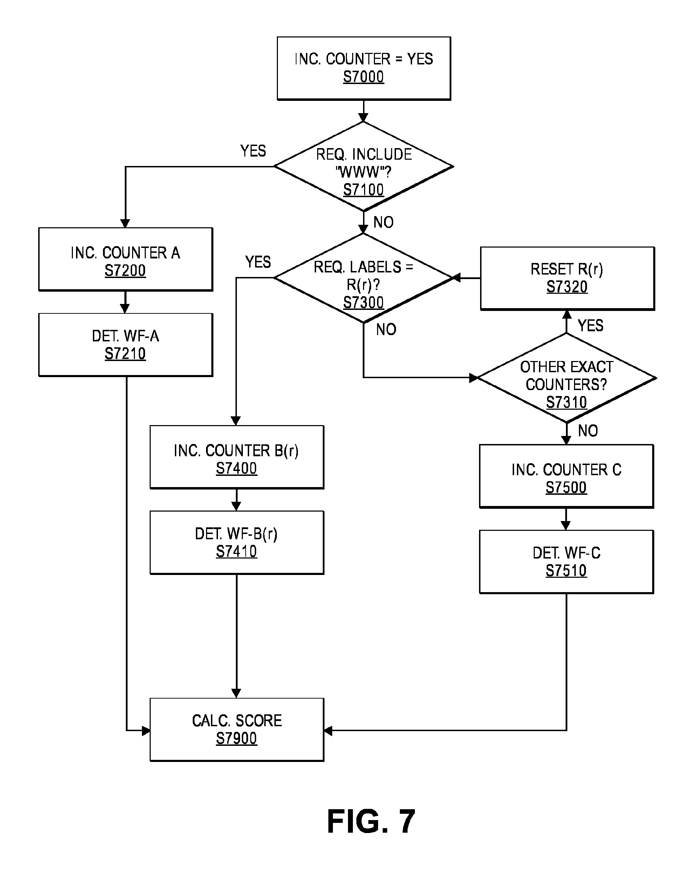

With reference to Fig. 7, exemplary methods may include determining if a counter is to be incremented with respect to a received request in S7000, e.g. in a similar manner to S3300 in Fig. 3. As detailed above, in some embodiments, a hit counter may be incremented for received DNS requests for a domain. In some instances, it may be determined that a limited counter will not be incremented. In the event that the counter in question will be incremented, the method may proceed with S7100.

In S7100, the request may be evaluated to determine whether the first label of a received domain name includes the string "www". The string may be an independent part of the requested address, as in the case of "www.example.com", or nested with other characters, such as "www l.example.com". If it is determined that the first label includes the string "www", then the method may proceed with S7200, where a counter "A" may be incremented, such as a www counter for the domain name. If the first label of the received domain name does not include the string "www", the method may proceed to S7300.

In S7300, the request may be evaluated to determine whether the labels satisfy a predetermined condition "R(r)". R(r) can take numerous forms including a predetermined number of labels, a specified string, or other features of DNS request. In the case of designating a number of labels, described embodiments include where R(2) = two labels. If the received domain name has only the predetermined number R(2) of labels, e.g. two labels in "example.com", then the method may proceed to S7400, where a counter B(r) is incremented, such as a two-label "exact" counter B(2) for the domain name. If the request does not have only the designed number R of labels, e.g. it has more than two labels when the predetermined number R of labels is two, then the method may proceed with S7310. Embodiments may include a plurality of B counters, e.g. multiple exact counters. These may include, for example, separate counters for various numbers for R(r), or different versions, of "exact" counters for exact portions of domain strings. As an example, an additional counter B(3) may be incremented in response to a request for "mail.example.com", in which R=3. As another example, requests with a particular string, e.g. "mail", may be counted by a counter, B("mail"), when the request contains the string, e.g. "mail5.example.com". This may be implemented by determining whether additional exact counters B(r) are being implemented in S7310. If there are other exact counters, the method may proceed to S7320 where R(r) may be reset to the new value for counter B(r). After R(r) is reset, the method may continue back to S7300 to determine if the requests satisfy the new criteria R(r). S7300, S7310 and S7320 can be reiterated until R(r) is satisfied, or there are no remaining exact counters. If there are no remaining exact counters, the method may proceed to S7500.

In S7500, a counter "C" may be incremented, such as a miscellaneous counter for the domain name. Although it is not required to count miscellaneous requests, i.e. requests that do not meet any of the preceding categories, a miscellaneous counter may provide advantages in evaluating the meaningfulness of detected traffic. For example, a miscellaneous counter may be used in comparison with the www counter and the exact counter(s) to determine a percentage of traffic that is apparently driven by human interaction.

In S7210, S7410, and/or S7510, a weighting factor may be determined and/or assigned to the counters A, B(r) and/or C, respectively. Weighting factors may be applied to all, or less than all of the counters for a domain. For example, a weighting factor may be applied to one, two, or all counters for a domain. Assigning a weighting factor can be based on several factors related to the nature of the counter and other information gathered with respect to the domain. Weighting factors may also be applied in a dynamic manner. For example, over the course of time, the counts of the different counters for a domain may change or information may be developed regarding the domain. This may prompt a change in one or more of the weighting factors applied to the counters for the domain. The method may continue with S7900.

In S7900, a score may be calculated for the domain, such as a traffic score. The traffic score may be based on a plurality of the counters. It should be noted that it is not required to use counts from all of the relevant counters. Scores may be calculated based on one, two or more counts, with any relevant weighting factors considered. Thus, a domain traffic score may be calculated based upon a plurality of the counters, and may include applying a weighting factor to at least one of the counters.

As indicated previously, when a recursive name server gets an answer to a DNS query, it may cache it for future use. The time that each answer is saved in the cache is based on the TTL. Measuring a domains' traffic by the total number of queries targeting the domain may have inaccuracies based on the caching function and the TTL for the DNS record. Compensating for the caching function can be particularly difficult in large-scale implementations based on the fact that each domain/resolver may manage its TTL differently. For instance, a resolver may refresh its cache every 6 hours, while another resolver may refresh its cache every 12 hours. Even if both resolvers are asked for a given domain the exact number of times, roughly speaking, the first resolver would be expected to generate twice as much query traffic up the DNS chain for this domain, compared to the second, even though both resolvers are representing the same amount of user-generated traffic to the domain. Several features consistent with embodiments discussed herein address this issue.

As a first example, a weighting score may be determined based on a TTL for the DNS file. This can compensate, somewhat, for limitations of hit counters linked to authoritative name servers, that only see requests that are actually forwarded to the server. Based on the number of requests forwarded to the server, a weighting factor based on the TTL can be used to calculate an estimate of the total traffic that is being directed to the domain. In general, traffic for sites with a relatively long TTL may receive a higher weight factor than those with shorter TTLs. Weighting factors can be established based on a ratio of TTLs among the scored/ranked domains.

As discussed herein, disclosed methods may be directed to observing the number of distinct querying IP addresses, set of resolvers, and the like, which has been found to introduce less noise and less dependence on the TTL and caching policy of each individual resolver. This approach has been found to be particularly useful in the field of observing traffic at the level of the TDL and other authoritative name servers, which may see enormous volumes of overall traffic. The metric of unique querying IP addresses, set of resolvers, and the like, can also prevent large offsets received by the total hit counters. For example, rather than relying exclusively on a total volume of traffic reflected by a hit counter, each distinct querying IP addresses, set of resolvers, and the like, may be counted only once per predetermined period of time, e.g. a 24-hour period.

In this regard, it is useful to consider two types of metrics:

Hits (H): The total number of queries generated for a given domain.
Subnets (S): The number of distinct resolver IP addresses, set of resolvers and the like generating queries for a given domain.

As discussed above, a given query can request one of three types of domain targets: www, Exact, Other. Several factors that help to meaningfully interpret the nature of the traffic based on the counts of the respective requests. This can help in understanding the extent to which each query of a particular type reflects user traffic, as opposed to non-user traffic, such as web services, etc.

With regards to www queries, it may be assumed that the majority of traffic referring to such targets is user-oriented. However, while www queries typically reflect user-oriented traffic in a domain, they do not always comprise all of the user-oriented traffic for the domain. It has been found that, for some domains, a portion of the user-oriented traffic resides within the "Exact" and "Other" metrics. For instance, for some popular web sites, less than 10% of the requests fall within the www category. Therefore, calculating a score based only on the www metric can result in certain web sites being ranked much lower than they should be based on the actual traffic that the web site is seeing. This has been found to be particularly relevant in evaluating the popularity of large domains in which the "Other" queries may comprise a large proportion of user-oriented traffic. For instance, a domain "example.com" may see most traffic directed to popular sub-domains, e.g. mail.example.com; games.example.com; news.example.com; etc.

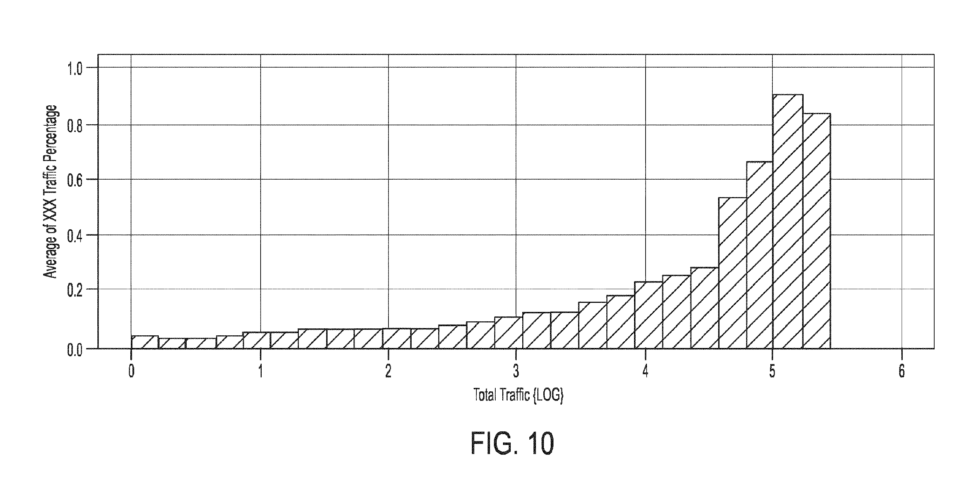

There is high correlation between the size of the domain (i.e. amount of its traffic) and the percentage of its "Other" traffic out of its overall traffic. Fig. 10 illustrates the relation between domain traffic size (in log space) and the percentage of the traffic going to the "Other" targets (sub-domains). Note that the value or each bar is the average of the percentage of all domains located in that bar.

This shows a clear relation between the two factors, meaning larger domains tend to have higher percentage of their total traffic in the "Other" traffic. Thus, the significance of "Other" traffic may vary depending on the overall level of traffic for a domain. This observation has been taken into account in formulating the various methodologies described herein. For example, although other traffic may normally be given a lower weight factor than exact traffic, in embodiments, the weight factor for other traffic may be increased according to relative traffic volume.

In many of the referrals to web sites by users, the "www" prefix is omitted (e.g. "example.com"). However, the ratio of user-oriented to non-user oriented traffic reflected by such requests, and hence the significance of the "exact" requests, has been uncertain.

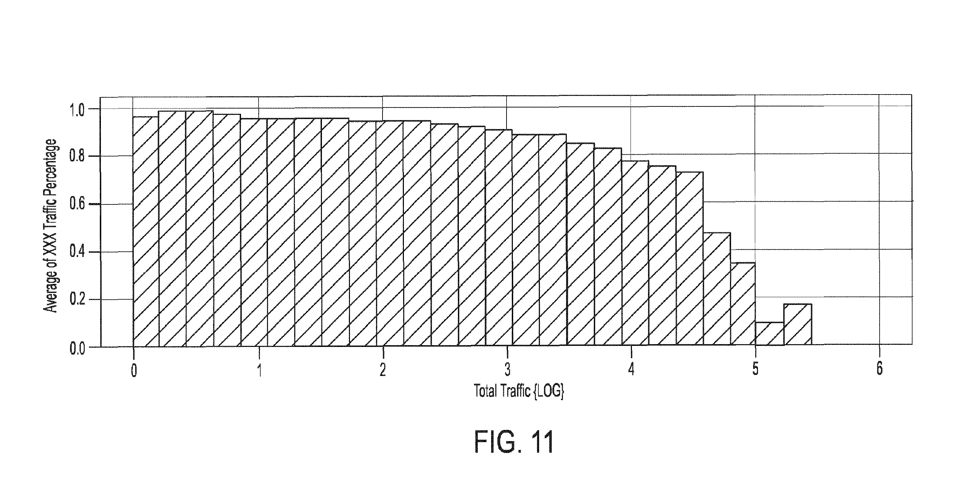

As described herein, considering both of the "www" and "exact" traffic metrics yields particularly favorable results. While the "exact" metric by itself does not fulfill a clear trend or consistency, when combined with the "www" metric, a clear pattern is observed. Thus, it has been determined that the two metrics complement one another in an unexpected way, as shown in Fig. 11.

A streamlined and accurate approach for measuring a given domain's performance is described herein by comparing its incoming traffic in a given period to the overall traffic in that period. In embodiments, www hits may be counted separately from all other requests. Alternatively, all three DNS target types may be included, e.g. www (W), exact (E) and other (O), and each may be assigned a different weight. As an additional feature, "set of resolvers" metrics may be used, alone, or in combination with "Hit" metrics. For example, the following represents an embodiment of the disclosed methodologies:

Calculate each domain's W/E/O average daily ratios for the given period; in other words, for each domain, calculate the average of its daily ratio between its distinct set of resolvers metric and the overall number of distinct set of resolvers that day. This can be done for each of the target types individually; W /E/O:

$$SW\_Ratio = \frac{1}{|P|} \cdot \sum_{Day_i \in P} \frac{SW(D,Day_i)}{SW(All,Day_i)}$$

$$SE\_Ratio(D,P) = \frac{1}{|P|} \cdot \sum_{Day_i \in P} \frac{SE(D,Day_i)}{SE(All,Day_i)}$$

$$SO\_Ratio(D,P) = \frac{1}{|P|} \cdot \sum_{Day_i \in P} \frac{SO(D,Day_i)}{SO(All,Day_i)}$$

Where D is Domain; P is Period ($|P|$ is the size of the period in days); and SW/E/O(All, $Day_i$) is the overall number of distinct set of resolvers querying W/E/O accordingly.

Calculate the overall score for the domain within the given period:

$$Score(D,P) = \frac{W_W \cdot SW_{Ratio(D,P)} + W_E \cdot SE_{Ratio(D,P)} + W_O \cdot SO\_Ratio(D,P)}{W_W + W_E + W_O}$$

Where $W_{W/E/O}$ is the weight of each of the target types W/E/O accordingly. In a preferred embodiment, the following approximate weights may be used in the above equation.

$$W_W = 1$$

$$W_E = 0.5$$

$$W_O = 0.2$$

In other embodiments, the weighting factors can be described more generally. For example, $W_W \geq W_E \geq W_O$. As suggested previously, $W_O$ can be adjusted according to traffic volume. For example, Wo may be corrected as $W_O = (W_O K)$, where K is a relative factor of domain traffic volume such that $K \geq 1$ represents a relatively high volume of traffic, and $K \leq$ represents a relatively low volume of traffic.

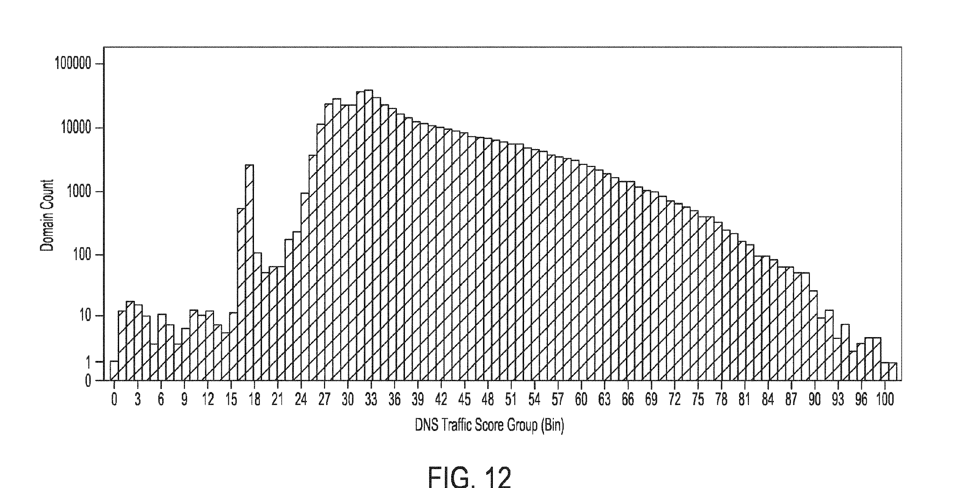

Grouping similar scores can improve the utility of the information to various users. For example, a useful representation of groups may be created by dividing the log of the scores to 100 equal width bins where 1 is the lowest and 100 in the highest. Fig. 12 shows the number of domains in each group.

In embodiments, advertising pricing can be determined based on the group for a domain. For example, a domain in a traffic group between 90-100 may have a different advertising rate applied to it as opposed to a domain in a traffic group between 50-60. It should be noted that these groups are not limited to raw traffic score data and represent a more meaningful and valuable metric based on the methodologies described herein, as well as the broad perspective gained from the level of the TLD server. For example, the methodologies discussed herein may identify web sites and domains that are developing traffic at a lower level and in advance of conventional methods. Such results can be obtained, in part, based on the ability of the TLD to aggregate, and evaluate the significance of, traffic from across the Internet.

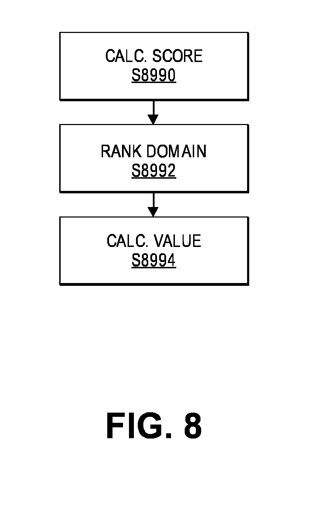

With reference to Fig. 8, embodiments may include taking a calculated score, such as in S3990, S6900, and/or S7900, and using that score to rank the domain. For example, a calculated traffic score for a domain may be compared against other calculated scores in S8992 in order to rank the domain among other domains on the web. Such rankings can be used in a more intuitive way for users to evaluate an appropriate pricing or value for advertising on a particular domain. The calculated ranks may be distributed as part of a pay service, or used for other purposes including system management, etc. Domain rankings can also be used in the context of commercial services, such as advertising, to calculate a value in S8994. For example, the value of advertising on a particular domain may be linked to a rank based equation that provides automated online advertising rates. Such systems can be used to evaluate and reward web site developers that are beginning to see significant traffic, in ways that are not possible using current methods. For example, a TLD server, or other vendor with access to the disclosed information, can automatically provide offers from potential advertisers to domains that meet a particular ranking. As indicated above, it is possible to identify previously unrecognized low-level traffic sites, that may be of interest to potential advertisers, when viewed from the position of the authoritative server, particularly the TLD server.

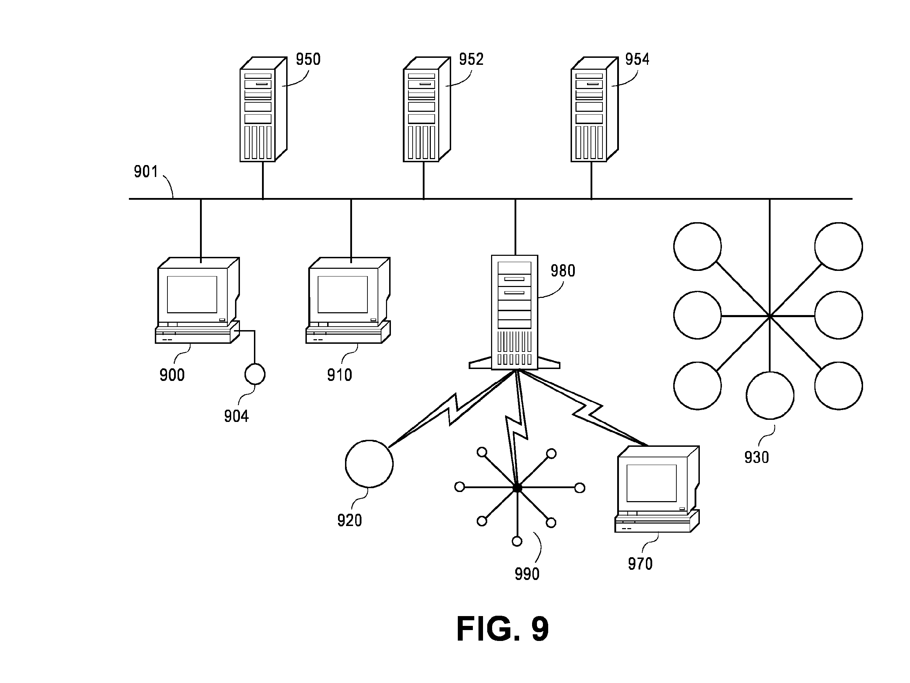

Embodiments as discussed herein can include systems for implementing the described methods, as well as non-transitory computer-readable storage medium coded with instructions for causing a computer to execute the described methods. For example, as shown in Figure 9, an electronic system 900 including a processor, a memory and an electronic communication device may be configured to request DNS information via ISP server 950. The system 900 may be represent a user computer system, wireless communication devices such as 920, 970, subnetworks such as 930, 990, a server, or any other network-capable device with the requisite functional capabilities. Servers 952, 954 may operate as part of, or separate from, a DNS server associated with a registry.

The system 900 includes any number of processors (not shown) that are coupled to storage devices including a first storage (not shown, typically a random access memory, or "RAM"), second storage (not shown, typically a read only memory, or "ROM"). Both of these storage devices may include any suitable type of the computer-readable media described and/or mentioned above. A mass storage device (not shown) may also be used to store programs, data and the like and is typically a secondary storage medium, such as a hard disk that is slower than primary storage. It will be appreciated that the information retained within the mass storage device, may, in appropriate cases, be incorporated in standard manner as part of primary storage as virtual memory. A specific mass storage device such as a CDROM may also pass data uni-directionally to the processor.

The system 900 may also include an interface that includes one or more input/output devices such as such as video monitors, track balls, mice 904, keyboards, microphones, touch-sensitive displays, transducer card readers, magnetic or paper tape readers, tablets, styluses, voice or handwriting recognizers, or other known input devices, including other computers 910. The system 900 may be coupled to a computer or other electronic communication network 990, 980 using a network connection as shown generally at 901. The network can connect various wired, optical, electronic and other known networks to exchange information among computers 910, servers 950, 952, 954, wireless communication devices 920, 970 and sub-networks 990, 930. With such a network connection, it is contemplated that the system 900 and the processor therein may receive information from the network, or may output information to the network in the course of performing the above-described method steps. The hardware elements described above may be configured (usually temporarily) to act as one or more modules for performing the operations described above.

In addition, embodiments disclosed herein further include non-transitory computer-readable storage media that include program instructions for performing various computer-implemented operations. The media may also include, alone or in combination with the program instructions, data files, data structures, tables, and the like. The media and program instructions may be those specially designed and constructed for the purposes of the present subject matter, or they may be of the kind available to those having skill in the computer software arts. Examples of computer- readable storage media include magnetic media such as hard disks, floppy disks, and magnetic tape; optical media such as CD·ROM disks; magnetooptical media such as optical disks; and hardware devices that arc specially configured to store and perform program instructions, such as read-only memory devices (ROM) and random access memory (RAM). Examples of program instructions include both machine code, such as produced by a compiler, and files containing higher level code that may be executed by the computer using an interpreter.

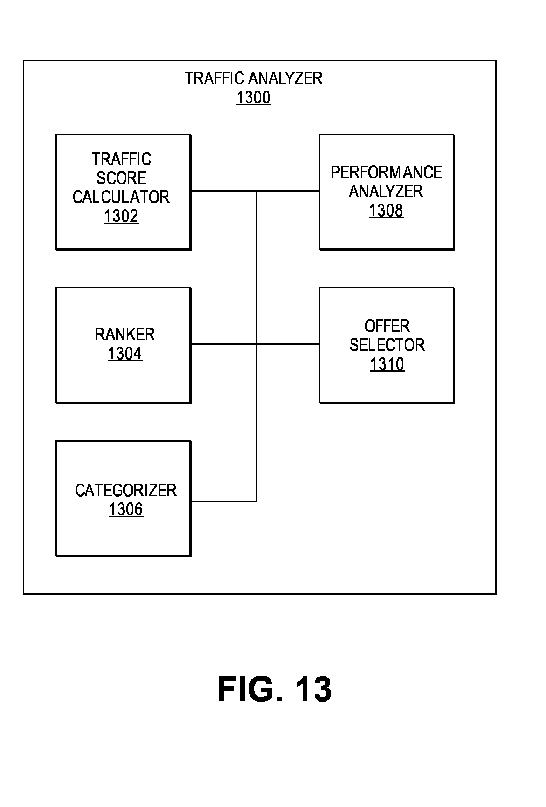

Fig. 13 depicts an example block diagram of components of a traffic analyzer 1300 in accordance with some embodiments. Traffic analyzer 1300 may be implemented in software in the form of machine readable instructions, hardware, or a combination thereof. Traffic analyzer 1300 may be located at authoritative name servers 230, 240, and/or 250 depicted in Fig. 2, or in other administrative devices not shown. As shown in Fig. 13, traffic analyzer 1300 includes traffic score calculator 1302. Traffic score calculator 1302 may access a set of traffic data for one or more periods of time for a plurality of domain names and calculate a traffic score for each of the domain names, as discussed above with regard to Figs. 1-12. Traffic Analyzer 1300 may further include ranker 1304. Ranker 1304 may rank each of the plurality of domain names based on the traffic scores of the domain names that were calculated by the traffic score calculator 1302, as discussed above with regard to Figs. 1-13.

Traffic analyzer 1300 may further include categorizer 1306. Categorizer may categorize each of a plurality of domain names into one or more of a plurality of categories. According to some examples, the categories may be traffic-based and may be defined based on traffic volume or traffic patterns at the domain name. For example, domains that have similar traffic volume or patterns are categorized together based on an assumption that a change in traffic in one domain in a category may be similar to a change in traffic to other domains in the category. For example, categories may be defined based on similar traffic volume, recursive name server characteristics where domain names receive traffic from the same recursive name server, open resolver, closed resolver, or ISP, receive traffic from a similar region, etc.

According to some examples, the traffic-based categories may be defined solely based on ranking of the domain names, where the rankings are generated based on traffic at a domain name. After the plurality of domain names are ranked 1 to N, where N an integer, using techniques discussed above, the ranked domain names may be divided into categories of a predetermined size of domain names. For example, if the predetermined category size is 10,000 domain names, then domain names ranked 1 through 10,000 are placed in one category, ranked domain names 10,001 through 20,000, are placed in a second category, etc., until all of the ranked domain names are categorized.

According to some examples, the categories may be content-based and may be defined based on information that is associated with the domain name. For example, according to some embodiments, the categories may be defined based on content of the website, use of the website, for example, domain names that are used for business purposes, domain names that are general use domain names, domain names that are used for a particular type of business, such as restaurants, etc. In this example, there may be no limit on the number of domain names that may be included in the categories.

According to some examples, the content-based categories may be defined based on the a language of the website, are hosted on a similar architecture, or have one or more similar features of the website, for example, domain names that have a shopping cart, whether the domain name supports email, keywords associated with the domain name, one or more areas of technology associated with the domain name, domain names that use tracking software, a type of architecture of the domain name, etc. In this example, there may be no limit on the number of domain names that may be included in the categories.

According to some examples, the categories may be defined based on information that is associated with an organization that owns the domain name. For example, the categories may be defined based on financial information of the organization that owns the domain name, etc. In this example, there may be no limit on the number of domain names that may be included in the categories.

Traffic analyzer 1300 may further include performance analyzer 1308. Performance analyzer 1308 may analyze each of the domain names in each of the categories by comparing the traffic data of each domain name in each category with the traffic data of all of the other domain names within the same category. According to some examples, two periods of time may be identified, for example via a user interface, and the traffic data for the two periods of time for each domain name may be accessed. A percent change in the traffic, i.e., a change in the number of request from a unique recursive name server, in the first time period and the second time period may be determined. The average percent change for all of the domain names within the category may be determined. For each domain name in the category, the standard deviation of the percent change with respect to the average percent change may be determined. The change in network traffic my indicate an increase (a positive percent change value), a decrease (a negative percent change value), or no change (where the percent change is zero) in network traffic from the first time period to the second time period.

Domain names having significantly larger, or significantly lower standard deviation values, or outliers, may be determined. The domain names having significantly later or significantly lower standard deviation values may indicate an out-performer or an under-performer domain name with respect to other domain names within the category. The outliers may be determined by establishing a threshold on which the number of standard deviations from normal is "interesting" or based on statistical analysis, for example raw percent change, Bollinger Bands, or other known statistical techniques. The process of determining the effective way for identifying the outliers is iterative in nature involving testing of the results at multiple thresholds to determine when the results meet acceptable quality levels..

Traffic analyzer 1300 may further include offer selector 1310. Once the outlier domain names have been identified, the offer selector may determine an action to be performed. The action to be performed may include determining an offer, for example an offer relating to networking services, financial investments, etc., that may be transmitted to the domain name based on the analysis performed by the performance analyzer 1308. For example, if it was determined that the domain name was an over-performer with respect to it's peer domain names in the category, the offer selector 1310 may analyze information associated with the over-performing domain name and offer one or more networking services that would improve the website, including, for example, added security features, a shared hosting platform, a dedicated hosting platform, etc. Alternatively, or in addition, the one or more offers related to financial investments may be offered.

Additional services that could be offered in response to observed changes could be solutions to mitigate against distributed denial of service attacks, payment fulfillment solutions that readily support multiple currencies or even simply translation services to support new users from a region that may benefit from native language content.

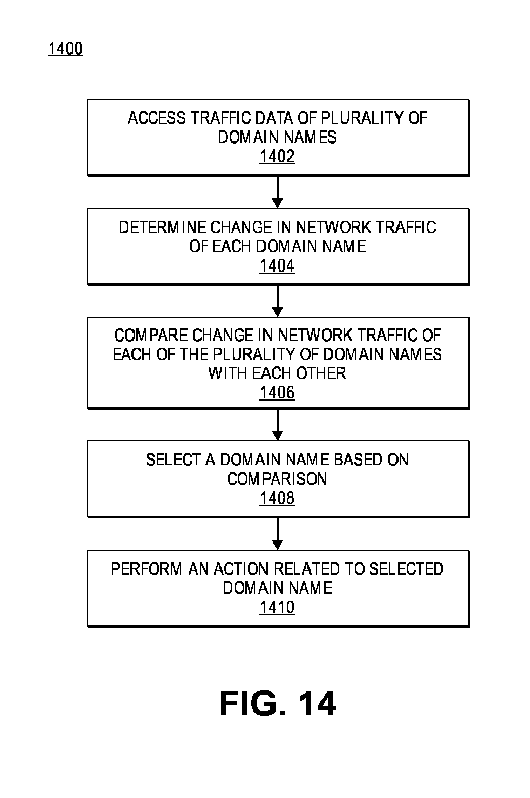

Fig. 14 depicts an example flow diagram of a process 1400 for selecting a domain name and performing an action, in accordance with some embodiments discussed herein. The process 1400 may be performed by traffic analyzer 1300 depicted in Fig. 13. As shown in Fig. 14, traffic data for a plurality of domain names is accessed in 1402. The plurality of domain names may be categorized within the same category. A change in network traffic is determined for each of the plurality of domain names in 1404. For example, for each domain name of the plurality of domain names, network traffic data, for example, a number of requests received from unique recursive name server, is analyzed to determine a change from one time period to another time period, or a change over a particular time period.

The change in network traffic for each of the plurality of domain names is compared with each of the other plurality of domain names in 1406. For example, within a particular category, the percent change in network traffic for each of the plurality of domain names is compared with each of the plurality of domain names within the same category. This may be performed by determining the mean of the percent change for all of the domain names within the category and determining a standard deviation of each percent change of traffic data for each domain name with respect to the mean.

One or more domain names may be selected based on the comparison in 1408. For example, statistical analysis may be performed based on the calculated standard deviation values for each of the domain names in the category in order to determine outlier domain names, representing over-performing or under-performing domains names within the category. An action may be performed related to the selected domain name in 1410. For example, one or more offers may be selected and provided to the under-performing or over-performing domain names.

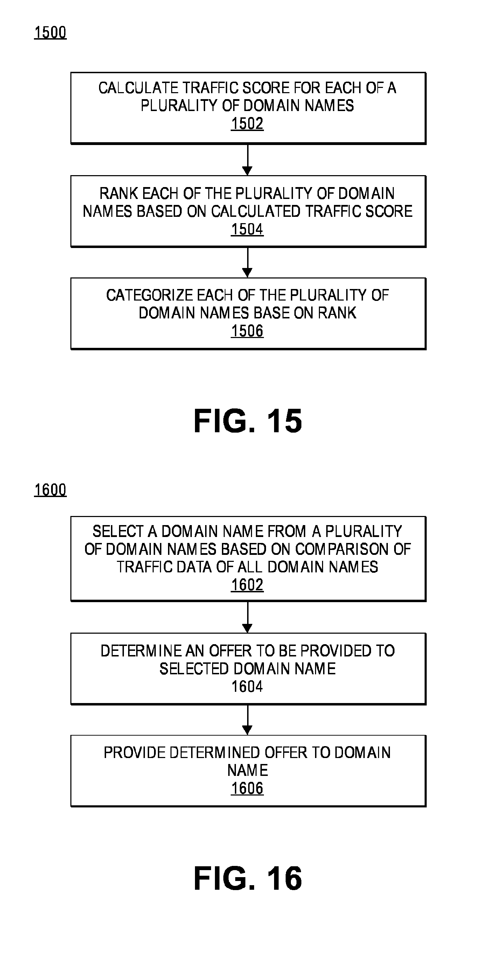

Fig. 15 depicts an example flow diagram of a process 1500 for categorizing a plurality of domain names. The process may be performed by traffic analyzer 1300 depicted in Fig. 3. As shown in Fig. 15, a traffic score is calculated for each of a plurality of domain names in 1502. Each of the plurality of domain names may be ranked based on the calculated traffic score in 1504. The traffic score and ranking may be calculated based on the techniques discussed above.

Each of the plurality of domain names may be categorized based on the rank of each of the plurality of domain names in 1506. For example, a predetermined category size may be defined by a user via a user interface. Alternatively, the category size may be determined based on statistical modeling that identifies outlier domain names representing under-performing or over-performing domain names when compared to other domain names having similar network traffic. In other words, if the category size was not sufficient in order to identify outliers, the category size may be reduced in order to identify outlier domain names.

Fig. 16 depicts an example flow diagram of a process 1600 for providing an offer to a domain name. The process 1600 may be performed by offer selector 1310 of traffic analyzer 1300 depicted in Fig. 13. As shown in Fig. 16, a domain name is selected from a plurality of domain names based on comparison of traffic data of all domain names in 1602. For example, the domain name may be selected based on is determination of an outlier domain name, such as an under-performing or over-performing domain name discussed in Fig. 14. An offer to be provided to the selected domain name may be determined in 1604. The offer to be provided to the selected domain name may be determined based on one or more characteristics of the domain name or the traffic volume or patterns of the domain name.

Once the offer is determined, the offer is provided to the domain name in 1606. For example, the offer may be transmitted to an owner of a domain name based on contact information that is associated with the domain name.

According to some embodiments, information relating to the outlier domain name may be obtained for at least a portion of the period of time(s) used to determine the percent change in an attempt to identify the reason why the domain name had a larger change in network traffic when compared to its peers. For example, financial-related data may be obtained including one or more of stock price data, daily stock volume, generic volatility of the stock price or stock volume, new client acquisition, operating margins, business intelligence information, business activity, financial health information, etc. This obtained data may be analyzed in order to determine whether there is a correlation between the change network traffic data of the domain name and the financial related data during at least a portion of the period of time.

Outliers are generally evaluated for how well they meet the target that the selection criteria were crafted to identify which in most circumstances is a product that is being offered as a result of the selection. In an earlier example where it was cited that the product offering may be translation services and in this case the simplest way to identify the effectiveness of the outlier detection is to offer the products to the targets and evaluate the conversion rate. If the conversion of targets identified by this technique meets an acceptable level then the filtering criteria can be deemed acceptable and subsequently used on a periodic basis to identify new targets. Determining whether or not they meet acceptable criteria is determined by evaluating against a predetermined test set of data.

Table 2 is an example of network traffic data, specifically a sum of unique recursive servers that have transmitted queries for multiple traffic dates representing multiple time periods for a plurality of domain names that are categorized in the same category:

Table 2

| SLD | 1/2/20xx | 1/9/20xx | 1/16/20xx | 1/23/xx | 1/30/20xx |
|---|---|---|---|---|---|
| abc.com | 54,860 | 67,390 | 69,217 | 72,033 | 72,544 |
| gfj.com | 29,535 | 34,245 | 31,931 | 34,665 | 33,394 |
| 123.com | 66,976 | 83,533 | 75,822 | 92,754 | 89,379 |
| xyz.com | 39,104 | 46,896 | 45,610 | 50,298 | 48,816 |

(continued)

| SLD | 1/2/20xx | 1/9/20xx | 1/16/20xx | 1/23/xx | 1/30/20xx |
|---|---|---|---|---|---|
| alb.com | 9,357 | 10,347 | 9,816 | 12,276 | 11,196 |
| 6bX.com | 4,198 | 3,859 | 3,935 | 4,285 | 4,323 |

Table 3 is an example of percent changes for each of the domain names for the time periods listed above:

Table 3

| SLD | 1/2/20xx | 1/9/20xx | 1/16/20xx | 1/23/xx | 1/30/20xx |
|---|---|---|---|---|---|
| abc.com | | 22.84% | 2.71% | 4.07% | 0.72% |
| gfj.com | | 15.95% | -6.76% | 8.56% | -3.67% |
| 123.com | | 24.72% | -9.23% | 22.33% | -3.64% |
| xyz.com | | 19.93% | -2.74% | 10.28% | -2.95% |
| alb.com | | 10.58% | -5.13% | 25.06% | -8.80% |
| 6bX.com | | -8.08% | 1.97% | 8.89% | 0.89% |

The average, or mean, and standard deviation of the percent change may be calculated as shown in Table 4 as follows:

Table 4

| SLD | 1/2/20xx | 1/9/20xx | 1/16/20xx | 1/23/xx | 1/30/20xx |
|---|---|---|---|---|---|
| abc.com | | 22.84% | 2.71% | 4.07% | 0.72% |
| gfj.com | | 15.95% | -6.76% | 8.56% | -3.67% |
| 123.com | | 24.72% | -9.23% | 22.33% | -3.64% |
| xyz.com | | 19.93% | -2.74% | 10.28% | -2.95% |
| alb.com | | 10.58% | -5.13% | 25.06% | -8.80% |
| 6bX.com | | -8.08% | 1.97% | 8.89% | 0.89% |
| Average | | 14.32% | -3.20% | 13.20% | -2.91% |
| Standard Deviation | | 12.09% | 4.79% | 8.44% | 3.56% |

Outlier domain names may be thus determined based on the average and standard deviation. As discussed above actions may be performed based on the identified outlier domain names.

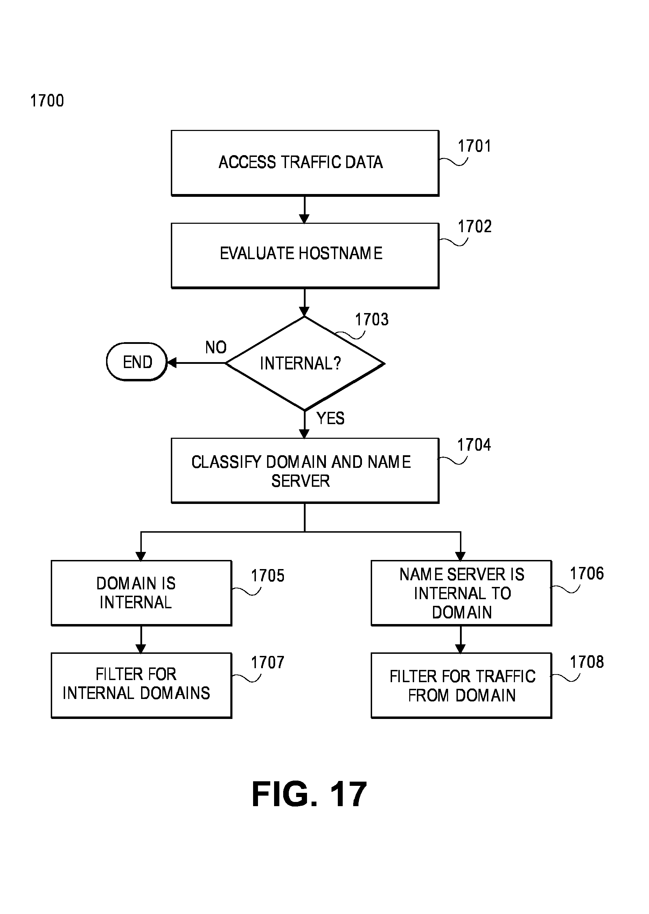

Fig. 17 depicts an example flow diagram of a process 1700 for evaluating whether or not a query indicates that a domain is used as an internal network domain or that the server issuing the query is associated with an internal domain. The process 1700 may be performed by traffic analyzer 1300 depicted in Fig. 13. As shown in Fig. 17, traffic data for a plurality of domain names is accessed in 1701. The plurality of domain names may be evaluated in 1702 based on the full host name in the query, i.e. wpad.vrsn.com and not simply vrsn.com. The evaluation criteria is executed in 1703 in order to determine whether the hostname is an internal hostname.

Example evaluation criteria includes but is not limited to the initial label of the host name is either "intranet", "wpad", "ldap", "ad", "isatap". Criteria are selected due to their correlation with specific network discovery patterns that are more likely to occur from networks that are probing for internal services.

If the evaluation criteria executed in 1703 arrives at a positive conclusion, meaning the hostname is an internal hostname, then the domain name and name server are classified by assigning a classification in 1704 for use in filtering. 1704 bifurcates the logic processor to handle classifications for the domain name the query was issued for in 1705 and the recursive name server issuing the query in 1706. The domain name the query was issued for is assigned the classification of "used for internal purposes" in 1705. The recursive name server that issued the query is assigned the classification of internal to the domain being queried in 1706. 1707 illustrates how the classification arrived at in 1705 may be used to filter for traffic observed for domains that are used for internal purposes. 1708 illustrates how the classification arrived at in 1706 may be used to filter for traffic from potential internal recursive name servers that is associated with any or a specifically targeted domain.

Filtering for traffic from a recursive name server that is associated with a target domain provides the ability to understand the plurality of domains that a particular domain may be interacting with.

Filtering to traffic for domains that are understood to be internal can create a signal that characterizes like domains that are used for internal infrastructure. When monitoring for domains that serve internal networks that are outliers it is more likely that they will be receptive to various networking products that will help with growing a secure and scalable network at a reasonable cost.

The foregoing descriptions have been presented for purposes of illustration and description. They are not exhaustive and do not limit the disclosed examples to the precise form disclosed. Modifications and variations are possible in light of the above teachings or may be acquired from practicing the disclosed examples. For example, the described implementation includes software, but the disclosed examples may be implemented as a combination of hardware and software or in firmware. Examples of hardware include computing or processing systems, including personal computers, servers, laptops, mainframes, microprocessors, and the like. Additionally, although disclosed aspects are described as being stored in a memory on a computer, one skilled in the art will appreciate that these aspects can also be stored on other types of computer-readable storage media, such as secondary storage devices, like hard disks, floppy disks, a CD-ROM, USB media, DVD, or other forms of RAM or ROM.

Computer programs based on the written description and disclosed methods are within the skill of an experienced developer. The various programs or program modules can be created using any of the techniques known to one skilled in the art or can be designed in connection with existing software. For example, program sections or program modules can be designed in or by means of .Net Framework, .Net Compact Framework (and related languages, such as Visual Basic, C, etc.), XML, Java, C++, JavaScript, HTML, HTML/AJAX, Flex, Silverlight, or any other now known or later created programming language. One or more of such software sections or modules can be integrated into a computer system or existing browser software.

Other examples will be apparent to those skilled in the art from consideration of the specification and practice of the examples disclosed herein. The recitations in the claims are to be interpreted broadly based on the language employed in the claims and not limited to examples described in the present specification or during the prosecution of the application, which examples are to be construed non-exclusive. It is intended, therefore, that the specification and examples be considered as example(s) only, with a true scope and spirit being indicated by the following claims and their full scope equivalents.

The many features and advantages of the disclosure are apparent from the detailed specification, and thus, it is intended that the appended claims cover all systems and methods which fall within the true spirit and scope of the disclosure. As used herein, the indefinite articles "a" and "an" mean "one or more" in open-ended claims containing the transitional phrase "comprising," "including," and/or "having." Further, since numerous modifications and variations will readily occur to those skilled in the art, it is not desired to limit the disclosure to the exact construction and operation illustrated and described, and accordingly, all suitable modifications and equivalents may be resorted to, falling within the scope of the disclosure.

**Claims**

1. A computer-implemented method, comprising:

   accessing a set of network traffic data for a plurality of domain names;
   determining a change in network traffic based on the set of network traffic data;
   comparing the change in network traffic of each of the plurality of domain names with each other;
   selecting at least one domain name of the plurality of domain names based on the comparing of the change in network traffic of each of the plurality of domain names with each other; and
   performing an action relating to the domain name of the plurality of domain names that was selected.

2. The computer-implemented method of claim 1, wherein determining a change in network traffic comprises:

   accessing network traffic from the set of network traffic data for each of the plurality of domain names for a first time period;
   accessing network traffic form the set of network traffic data for each of the plurality of domain names for a second time period; and
   determining the change in network traffic for each of the plurality of domain names based on the network traffic for the first time period and the second time period.

3. The computer-implemented method of claim 2, wherein the set of network traffic data for each of the plurality of domain names includes at least one of a number of unique recursive name servers that have transmitted queries and a number of queries.

4. The computer-implemented method of claim 1, further comprising:

categorizing each of the plurality of domain names into one of a plurality of categories based on information associated with the domain name,

wherein comparing the change in network traffic of each of the plurality of domain names with each other includes comparing the change in network traffic of each of the plurality of domain names that are categorized in the same category.

5. The computer-implemented method of claim 4, wherein each of the plurality of domain names is categorized based on at least one of network traffic and content of a website at the domain name.

6. The computer-implemented method of claim 1, wherein performing an action comprises:

determining a service to offer an owner of the at least one domain name of the plurality of domain names that was selected based on the comparing of the change in network traffic of each of the plurality of domain names with each other; and
offering the service that was determined to be offered.

7. The computer-implemented method of claim 6, wherein the offer includes at least one of a networking service and a financial investment.

8. The computer-implemented method of claim 1, wherein the selecting at least one domain name of the plurality of domain names based on the comparing of the change in network traffic of each of the plurality of domain names with each other includes determining a standard deviation of the change of each of plurality of domain names with all of the other plurality of domain names.

9. The computer-implemented method of claim 1, further comprising:

ranking each of the plurality of domain names based on a traffic score calculated based on the set of network traffic data; and
categorizing each of the plurality of domain names into one of a plurality of categories based on the ranking.

10. An apparatus comprising:

a memory configured to store a set of instructions; and
a processor configured to execute the stored set of instructions to perform the method of any one of claims 1 to 9.

11. A non-transitory computer-readable medium, storing a set of instructions that, when executed by a processor perform the method of any one of claims 1 to 9.

# FIG. 1

**FIG. 2**

EP 2 988 455 A1

START
S3000

REC'V REQUEST
S3100

INC. HIT COUNTER
S3200

SERVER COUNT
$\geq$ X?
S3300

YES

NO

INC. SERV. COUNTER
S3400

DET. SUBNET
S3500

SUBMIT DATA
S3600

DEL. SUBNET WF
S3700

USER REQ?
S3800

NO

YES

DET. USER WF
S3900

CALC. SCORE
S3990

# FIG. 3

```
┌─────────────────────┐
│     DET. SUBNET     │
│       S4500         │
└─────────────────────┘
           │
           ▼
┌─────────────────────┐
│   DET. SUBNET LOC.  │
│       S4510         │
└─────────────────────┘
           │
           ▼
┌─────────────────────┐
│    DET. SUBNET TV   │
│       S4520         │
└─────────────────────┘
           │
           ▼
┌─────────────────────┐
│    DET. SUBNET TT   │
│       S4530         │
└─────────────────────┘
           │
           ▼
┌─────────────────────┐
│    DET. SUBNET WF   │
│       S4700         │
└─────────────────────┘
```

# FIG. 4

```
        ┌─────────────────────┐
        │    DET. SUBNET      │
        │      S5600          │
        └─────────────────────┘
                   │
                   ▼
        ┌─────────────────────┐
        │  DET. SUBNET ARC.   │
        │      S5600          │
        └─────────────────────┘
                   │
                   ▼
              ╱─────────╲
            ╱  EVAL. SUBNET ╲
     ┌─────◄   ARCH?         ►
     │      ╲    S5620      ╱
     │        ╲─────────╱
     │             │
     │             ▼
     │    ┌─────────────────────┐
     │    │    DET. ARCH. WF    │
     │    │      S5640          │
     │    └─────────────────────┘
     │             │
     │             ▼
     │    ┌─────────────────────┐
     └───►│   DET. SUBNET WF    │
          │      S5700          │
          └─────────────────────┘
```

# FIG. 5

**FIG. 6**

INC. COUNTER = YES
S7000

REQ. INCLUDE "WWW"?
S7100

YES

NO

INC. COUNTER A
S7200

REQ. LABELS = R(r)?
S7300

YES

NO

RESET R(r)
S7320

DET. WF-A
S7210

OTHER EXACT COUNTERS?
S7310

YES

NO

INC. COUNTER B(r)
S7400

INC. COUNTER C
S7500

DET. WF-B(r)
S7410

DET. WF-C
S7510

CALC. SCORE
S7900

# FIG. 7

CALC. SCORE
S8990

RANK DOMAIN
S8992

CALC. VALUE
S8994

# FIG. 8

**FIG. 9**

EP 2 988 455 A1

FIG. 10

EP 2 988 455 A1

FIG. 11

FIG. 12

TRAFFIC ANALYZER
1300

TRAFFIC
SCORE
CALCULATOR
1302

PERFORMANCE
ANALYZER
1308

RANKER
1304

OFFER
SELECTOR
1310

CATEGORIZER
1306

# FIG. 13

1400

ACCESS TRAFFIC DATA OF PLURALITY OF
DOMAIN NAMES
1402

DETERMINE CHANGE IN NETWORK TRAFFIC
OF EACH DOMAIN NAME
1404

COMPARE CHANGE IN NETWORK TRAFFIC OF
EACH OF THE PLURALITY OF DOMAIN NAMES
WITH EACH OTHER
1406

SELECT A DOMAIN NAME BASED ON
COMPARISON
1408

PERFORM AN ACTION RELATED TO SELECTED
DOMAIN NAME
1410

# FIG. 14

1500

CALCULATE TRAFFIC SCORE FOR EACH OF A
PLURALITY OF DOMAIN NAMES
1502

RANK EACH OF THE PLURALITY OF DOMAIN
NAMES BASED ON CALCULATED TRAFFIC SCORE
1504

CATEGORIZE EACH OF THE PLURALITY OF
DOMAIN NAMES BASE ON RANK
1506

# FIG. 15

1600

SELECT A DOMAIN NAME FROM A PLURALITY
OF DOMAIN NAMES BASED ON COMPARISON OF
TRAFFIC DATA OF ALL DOMAIN NAMES
1602

DETERMINE AN OFFER TO BE PROVIDED TO
SELECTED DOMAIN NAME
1604

PROVIDE DETERMINED OFFER TO DOMAIN
NAME
1606

# FIG. 16

1700

```
                    ┌──────────────────────────┐
                    │   ACCESS TRAFFIC DATA     │──── 1701
                    └──────────────────────────┘
                                │
                                ▼
                    ┌──────────────────────────┐
                    │    EVALUATE HOSTNAME      │──── 1702
                    └──────────────────────────┘
                                │
                                ▼
                         1703
              NO      ◇──────────◇
  ( END )  ◄─────────  INTERNAL?
              ◇──────────◇
                                │
                              YES
                                ▼
                    ┌──────────────────────────┐
                    │  CLASSIFY DOMAIN AND NAME │──── 1704
                    │         SERVER            │
                    └──────────────────────────┘
```

```
┌────────────────┐                ┌────────────────────┐
│   DOMAIN IS    │──── 1705       │  NAME SERVER IS    │──── 1706
│   INTERNAL     │                │   INTERNAL TO      │
└────────────────┘                │     DOMAIN         │
         │                        └────────────────────┘
         ▼                                  │
┌────────────────┐                          ▼
│   FILTER FOR   │──── 1707       ┌────────────────────┐
│ INTERNAL DOMAINS│               │  FILTER FOR TRAFFIC │──── 1708
└────────────────┘                │    FROM DOMAIN     │
                                  └────────────────────┘
```

# FIG. 17

Europäisches
Patentamt
European
Patent Office
Office européen
des brevets

**EUROPEAN SEARCH REPORT**

Application Number

EP 15 18 2060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/118118 A1 (VERISIGN INC [US]; HOLMES ALEX [US]; SIMPSON ANDREW [US]; SHYAMSUNDER) 14 October 2010 (2010-10-14) * abstract * * paragraph [0051] - paragraph [0099] * | 1-11 | INV. H04L12/26 G06Q30/02 |
| X | EP 2 592 814 A1 (VERISIGN INC [US]) 15 May 2013 (2013-05-15) * paragraphs [0003], [0019] - [0024] * | 1-11 | |
| X | LEYLA BILGE ET AL: "Exposure", ACM TRANSACTIONS ON INFORMATION AND SYSTEM SECURITY, ACM, NEW YORK, NY, US, vol. 16, no. 4, 1 April 2014 (2014-04-01), pages 1-28, XP058048012, ISSN: 1094-9224, DOI: 10.1145/2584679 * Sections 1 to 3 * | 1-11 | |
| X | Anonymous: "DNS analytics - Wikipedia, the free encyclopedia", , 13 July 2014 (2014-07-13), pages 1-2, XP055240946, Retrieved from the Internet: URL:https://en.wikipedia.org/w/index.php?title=DNS_analytics&oldid=616730284 [retrieved on 2016-01-13] * the whole document * | 1-11 | |

TECHNICAL FIELDS
SEARCHED      (IPC)

H04L
G06Q

The present search report has been drawn up for all claims

| Place of search | Date of completion of the search | Examiner |
|---|---|---|
| Berlin | 14 January 2016 | Böhmert, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 18 2060

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2016

| Patent document cited in search report | | Publication date | Patent family member(s) | | Publication date |
|---|---|---|---|---|---|
| WO 2010118118 | A1 | 14-10-2010 | AU | 2010234484 A1 | 17-11-2011 |
| | | | AU | 2010234491 A1 | 17-11-2011 |
| | | | CA | 2757832 A1 | 14-10-2010 |
| | | | CA | 2757834 A1 | 14-10-2010 |
| | | | CN | 102460416 A | 16-05-2012 |
| | | | CN | 102549562 A | 04-07-2012 |
| | | | EP | 2417535 A1 | 15-02-2012 |
| | | | EP | 2417537 A1 | 15-02-2012 |
| | | | JP | 2012523625 A | 04-10-2012 |
| | | | JP | 2012523762 A | 04-10-2012 |
| | | | KR | 20120005016 A | 13-01-2012 |
| | | | KR | 20120016084 A | 22-02-2012 |
| | | | RU | 2011144860 A | 20-05-2013 |
| | | | RU | 2011144861 A | 20-05-2013 |
| | | | US | 2010257024 A1 | 07-10-2010 |
| | | | US | 2010257266 A1 | 07-10-2010 |
| | | | US | 2011087769 A1 | 14-04-2011 |
| | | | US | 2015058139 A1 | 26-02-2015 |
| | | | US | 2015089056 A1 | 26-03-2015 |
| | | | WO | 2010118111 A1 | 14-10-2010 |
| | | | WO | 2010118118 A1 | 14-10-2010 |
| EP 2592814 | A1 | 15-05-2013 | EP | 2592814 A1 | 15-05-2013 |
| | | | US | 2013117282 A1 | 09-05-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62040914 A